# EUROPEAN PATENT SPECIFICATION

(11) **EP 3 373 657 B1**
(45) Date of publication and mention of the grant of the patent: **09.09.2020**
(21) Application number: 18155472.6
(22) Date of filing: 07.02.2018
(51) Int. Cl.: H04W 48/14, H04W 84/12, H04W 12/00, H04W 8/10, H04W 4/50

(54) **WIRELESS ROUTER, INTERNET OF THINGS DEVICE AND SYSTEM FOR SUPPORTING CONNECTION TO WIRELESS ROUTER OF INTERNET OF THINGS DEVICE**
DRAHTLOSER ROUTER, INTERNET-DER-DINGE-VORRICHTUNG UND SYSTEM ZUR UNTERSTÜTZUNG DER VERBINDUNG MIT EINEM DRAHTLOSEN ROUTER DES INTERNETS-DER-DINGE
ROUTEUR SANS FIL, DISPOSITIF DE L'INTERNET DES OBJETS ET SYSTÈME POUR SUPPORTER UNE CONNEXION À UN ROUTEUR SANS FIL DU DISPOSITIF DE L'INTERNET DES OBJETS

(30) Priority: 08.03.2017 KR 20170029457
(43) Date of publication of application: 12.09.2018
(73) Proprietor: Samsung Electronics Co., Ltd., Gyeonggi-do 16677 (KR)
(72) Inventor: YOON, Ye Ji, 16697 Gyeonggi-do, (KR); CHOI, Jong Mu, 13555 Gyeonggi-do, (KR); KANG, Min Ho, 16698 Gyeonggi-do, (KR); PARK, Jin Hyun, 16698 Gyeonggi-do (KR); LIM, Jun Hak, 16501 Gyeonggi-do, (KR); CHAE, Won Tae, 16676 Gyeonggi-do, (KR); CHOI, Bo Kun, 08090 Seoul, (KR); JEONG, Jin Hong, 16909 Gyeonggi-do, (KR); KANG, Doo Suk, 16664 Gyeonggi-do, (KR); LEE, Sun Key, 13607 Gyeonggi-do, (KR); KIM, Byung Sung, 16877 Gyeonggi-do (KR); KIM, Jin Il, 16806 Gyeonggi-do, (KR); PARK, Chan Woo, 13556 Gyeonggi-do, (KR)
(74) Representative: HGF

(56) References cited:
- EP-A1- 1 806 897
- WO-A1-2016/148548
- CN-A- 105 119 939
- US-A1- 2015 317 467
- US-A1- 2016 205 553
- US-B1- 9 301 141

## Description

### BACKGROUND OF THE INVENTION

### 1. Field of the Invention

The present disclosure relates to a technology that supports connection between a wireless router and an internet of things (IoT) device.

### 2. Background of the Invention

With the development of a communication technology, home appliances such as a television, a refrigerator, a washer, and the like as well as terminals such as a laptop personal computer (PC), a smartphone, and the like may access Internet by using a wireless communication technology (e.g., cellular mobile communication, short range wireless communication, or the like).

However, compared with a terminal such as a smartphone, it is difficult to enter a user input into the home appliances. For example, to connect the air conditioner to a wireless router, a user needs to select the wireless router by using the displays of the remote controller and the air conditioner. For another example, to connect a washer to the wireless router, the user needs to establish a connection to the wireless router through a small touch screen on the front surface of the washer.

For another example, a user terminal may be connected to the internet of things (IoT) device by recognizing an IoT device as a wireless router, and the user terminal may transmit information of a wireless router to the IoT device.

The above information is presented as background information only to assist with an understanding of the present disclosure. No determination has been made, and no assertion is made, as to whether any of the above might be applicable as prior art with regard to the present disclosure.

US 2016/0205553 A1 discloses systems and methods for providing secure communications in an open network. One method can comprise storing first information associated with a user device and a first network device. A secure connection between the user device and a second network can be established via a second network device based upon at least a portion of the first information.

WO 2016/148548 A1 discloses a method for performing initial setup with a connection acceptance device by a connection request device. The method comprises performing an association procedure with a configurator; transmitting a first probe request message to the configurator; receiving a first probe response message including information required for a connection to the connection acceptance device from the configurator; driving a timer and transmitting a second probe request message to the connection acceptance device; receiving a second probe response message from the connection acceptance device; and starting a secure connection to the connection acceptance device when the second probe request message is received before the timer has expired, and information included in the second probe response message coincides with the information required for the connection, which is included in the first probe response message.

EP 1806897 A1 discloses a method of wireless security setup. The method includes a station transmitting a first packet containing a first SSID and related information; an access point (100) transmitting a second packet containing the first SSID to inform that the connection between the station and the first SSID is built; the station transmitting a third packet by the connection with the first SSID to ask for an SSID other than the first SSID and related information; the access point (100) transmitting a fourth packet containing a second SSID and the related information using the first SSID in response to the third packet; the station transmitting a fifth packet containing the second SSID and the related security information; and the access point (100) transmitting a sixth packet containing the second SSID to inform the station that the connection between the station and the second SSID is built.

US 2015/0317467 A1 discloses aspects directed towards automating an onboarding procedure. In an aspect, an administrative communication associated with onboarding an onboardable device is received by an access point (AP) device, such that the administrative communication originates from a device different than the onboardable device. The AP device then enables the onboardable device to access a secure network based on the administrative communication.

US 9301141 B1 discloses a wireless communications system mitigating the threat of a man-in-the-middle attack when sharing network credentials with a new device. A new wireless device signals that it needs credentials if no other devices are signaling that they need credentials. The new device provides a visible or audible indicator when requested to do so by a device with credentials.

CN 105119939A discloses cut-in methods of wireless network and device. The methods include broadcasting transmission wireless network probe messages, and determining whether a wireless access point offer occurs in response to temporary radio network in the wireless network probe messages, connecting the temporary radio network, receiving the access information, wherein formal wireless network is provided according to the access information.

### SUMMARY OF THE INVENTION

As described above, if an internet of things (IoT) device has a limit ed input means, has a small display, or has no display, a setup method of connect ing the IoT device to a wireless router is complex.

Aspects of the present disclosure are to address at least the above-mentioned problems and/or disadvantages and to provide at least the advantages described below. Accordingly, an aspect of the present disclosure is to provide a wireless router for detecting a new IoT device and transmit information about the new IoT device to a user terminal, and thus, the new IoT device is easily connected to the wireless router.

The invention is defined by the independent claims. Further aspects of the invention are outlined in the dependent claims. When the term "embodiment" is used for describing unclaimed combinations of features, the term has to be understood as referring to examples useful for understanding the present invention.

Various types of electronic devices may easily access a wireless router, and then a user may conveniently utilize Internet.

A user may easily establish the network connection to the IoT device, thereby improving the convenience of the user.

The IoT device connected to the wireless router may be managed by using account information registered in the wireless router, for respective account information.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1A illustrates a system to which an internet of things (IoT) device is connected, according to an embodiment of the present disclosure;
FIG. 1B illustrates a system to which an IoT device is connected, according to an embodiment of the present disclosure;
FIG. 2A is a flowchart illustrating a process in which an IoT device is connected to a wireless router, according to an embodiment of the present disclosure;
FIG. 2B is a flowchart illustrating a process in which an IoT device and a wireless router establish wireless connection, according to an embodiment of the present disclosure;
FIG. 2C is a flowchart illustrating a process in which an IoT device and a wireless router establish wireless connection, according to another embodiment of the present disclosure;
FIG. 2D is a flowchart illustrating a process in which a setup device requests second information and receives the second information, according to an embodiment of the present disclosure;
FIG. 2E is a flowchart illustrating a process in which a wireless router transmits connection information to an IoT device depending on a transmission request of connection information, according to an embodiment of the present disclosure;
FIG. 3 illustrates a screen displayed by a user terminal receiving an authentication request, according to an embodiment of the present disclosure;
FIG. 4 illustrates a screen displayed by a user terminal transmitting authentication information, according to an embodiment of the present disclosure;
FIG. 5A illustrates a screen displayed by a user terminal after an IoT device is connected, according to an embodiment of the present disclosure;
FIG. 5B illustrates a screen in which a user terminal displays a list of IoT devices connected to a wireless router, according to an embodiment of the present disclosure;
FIG. 6 is a flowchart illustrating a process in which an IoT device is connected to a wireless router depending on a request of a user terminal, according to an embodiment of the present disclosure;
FIG. 7A illustrates a screen in which a user terminal displays a list of IoT devices after an IoT device is connected to a wireless router, according to an embodiment of the present disclosure;
FIG. 7B illustrates a screen displayed by a user terminal to transmit a request signal for searching for a new IoT device, according to an embodiment of the present disclosure;
FIG. 8 illustrates a screen that a user terminal displays after transmitting a search request signal, according to an embodiment of the present disclosure;
FIG. 9A illustrates a screen displayed by a user terminal receiving a connection accepting request, according to an embodiment of the present disclosure;
FIG. 9B illustrates a screen displayed by a user terminal receiving a message saying that an IoT device is not found, according to an embodiment of the present disclosure;
FIG. 10 illustrates a screen in which a user terminal displays a list of IoT devices after an IoT device is connected to a wireless router, according to an embodiment of the present disclosure;
FIG. 11 is a flowchart illustrating a process in which an IoT device is connected to a wireless router, according to an embodiment of the present disclosure;
FIG. 12 is a flowchart illustrating a process in which an IoT device is connected to a wireless router depending on a request of a user terminal connected to a wireless router, according to an embodiment of the present disclosure;
FIG. 13 is a flowchart illustrating an operation of a wireless router for connecting an IoT device to a wireless router, according to an embodiment of the present disclosure;
FIG. 14 is a flowchart illustrating an operation in which an IoT device is connected to a wireless router, according to an embodiment of the present disclosure;
FIG. 15 a flowchart illustrating an operation of a cloud system for connecting an IoT device to a wireless router, according to an embodiment of the present disclosure;
FIG. 16 is a flowchart illustrating a process in which an IoT device, which satisfies a condition, from among a plurality of IoT devices is connected to a wireless router, according to an embodiment of the present disclosure;
FIG. 17A illustrates a screen displaying a user interface (UI) for asking whether a setup device is going to proceed with connection setup, according to an embodiment of the present disclosure;
FIG. 17B illustrates a screen in which a setup device displays a direction message, according to an embodiment of the present disclosure;
FIG. 17C illustrates a screen displaying a message for providing notification that connection setup is in progress, according to an embodiment of the present disclosure;
FIG. 17D illustrates a screen in which a setup device obtains an account information input, according to an embodiment of the present disclosure;
FIG. 17E illustrates a screen in which a setup device obtains a location setting input of an IoT device, according to an embodiment of the present disclosure;
FIG. 18 illustrates an electronic device in a network environment, according to an embodiment of the present disclosure;
FIG. 19 illustrates a block diagram of an electronic device according to an embodiment of the present disclosure; and
FIG. 20 illustrates a block diagram of a program module, according to an embodiment of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In this disclosure, the expressions "have", "may have", "include" and "comprise", or "may include" and "may comprise" used herein indicate existence of corresponding features (e.g., elements such as numeric values, functions, operations, or components) but do not exclude presence of additional features.

In this disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in this disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor (AP)) which performs corresponding operations by executing one or more software programs which are stored in a memory device.

Terms used in this disclosure are used to describe specified embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of this disclosure. In some cases, even if terms are terms which are defined in this disclosure, they may not be interpreted to exclude embodiments of this disclosure.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) audio layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSyncTM, Apple TVTM, or Google TVTM), game consoles (e.g., XboxTM or PlayStationTM), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, global navigation satellite system (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs) of stores, or internet of things (IoT) (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of this disclosure may not be limited to the above-described electronic devices and may include other electronic devices and new electronic devices according to the development of technologies.

Hereinafter, electronic devices according to various embodiments will be described with reference to the accompanying drawings. In this disclosure, the term "user" may refer to a person who uses an electronic device or may refer to a device (e.g., an artificial intelligence electronic device) that uses the electronic device.

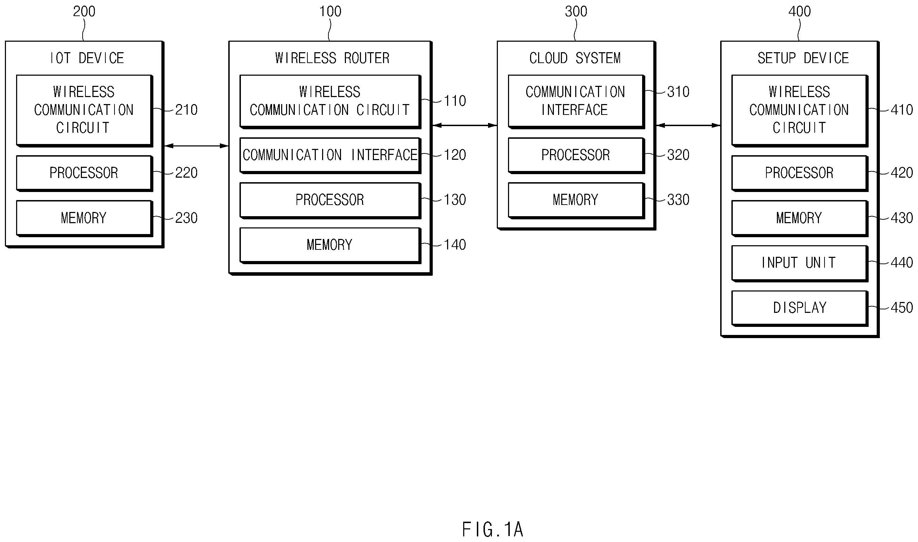

FIG. 1A illustrates a system to which an internet of things (IoT) device is connected, according to an embodiment of the present disclosure.

Referring to FIG. 1A, the system may include a wireless router 100, an IoT device 200, a cloud system 300, and a setup device 400. According to various embodiments, the system may exclude a part of the above-described elements. For example, the system may exclude the cloud system 300 from the above-described elements. According to various embodiments, the system may include at least parts of the above-described elements. For example, the system may include the plurality of wireless routers 100 or the plurality of setup devices 400.

The wireless router 100 may connect wireless devices to a wired device or may relay communication between the wireless devices. The wireless router 100 may serve as a bridge between a wired communication device and a wireless communication device. According to an embodiment, the wireless router 100 may execute the function of an access point (AP) or may be replaced with an AP.

According to an embodiment, the plurality of IoT devices 200 may be connected to the wireless router 100. According to an embodiment, the wireless router 100 may include a wireless communication circuit 110 (e.g., a transceiver), a communication interface 120, a processor 130 (e.g., at least one processor), and a memory 140 (e.g., a storage).

The wireless communication circuit 110 may be disposed inside the housing of the wireless router 100 and may be configured to support a wireless communication protocol. The wireless communication circuit 110 may allow the wireless router 100 to communicate with the IoT device 200 or the setup device 400 wirelessly. The wireless communication protocol supported by the wireless communication circuit 110 may include at least one of a Bluetooth (BT) scheme, a Zigbee communication scheme, a wireless highway addressable remote transducer

(HART) communication scheme, a near field communication scheme, a Wi-Fi scheme, a Wi-Fi direct scheme, a global system for mobile communication (GSM) scheme, a high speed downlink packet access (HSDPA) communication scheme, a long term evolution (LTE) communication scheme, a LTE-advanced (LTE-A) communication scheme, a code division multiple access (CDMA) communication scheme, a CDMA2000 communication scheme, or a wireless broadband (WIBRO) communication scheme. According to an embodiment, the coverage of the wireless communication circuit 110 may be within 100 meters.

The communication interface 120 may be disposed inside the housing of the wireless router 100 and may allow the wireless router 100 to communicate with the cloud system 300 by wire or wirelessly.

The processor 130 may be disposed inside the housing and may be operatively connected to the wireless communication circuit 110 and the communication interface 120. The processor 130 may control overall operations of the wireless router 100.

The memory 140 may be disposed inside the housing and may be electrically connected to or integrated in the processor 130; and the memory 140 may store an instruction or data, which is associated with the element of the wireless router 100.

The IoT device 200 may be an electronic device that is connected wirelessly to the wireless router 100. For example, the IoT device 200 may be a refrigerator, a washer, a television, a door lock, or the like. According to an embodiment, the IoT device 200 may include a wireless communication circuit 210 (e.g., a transceiver), a processor 220 (at least one processor), and a memory 230 (e.g., a storage).

The wireless communication circuit 210 may be disposed inside the housing of the IoT device 200 and may be configured to support a wireless communication protocol. The wireless communication circuit 210 may allow the IoT device 200 to communicate with the wireless router 100 wirelessly. The wireless communication protocol of the wireless communication circuit 210 may include at least one of a Bluetooth (BT) scheme, a Zigbee communication scheme, a wireless highway addressable remote transducer (HART) communication scheme, a near field communication scheme, a Wi-Fi scheme, a Wi-Fi direct scheme, a GSM communication scheme, a HSDPA communication scheme, a LTE communication scheme, a LTE-A communication scheme, a CDMA communication scheme, a CDMA2000 communication scheme, or a WIBRO communication scheme. According to an embodiment, the coverage of the wireless communication circuit 210 may be within 100 meters.

The processor 220 may be disposed inside the housing and may be operatively connected to the wireless communication circuit 210. The processor 220 may control overall operations of the IoT device 200.

The memory 230 may be disposed inside the housing and may be electrically connected to or integrated in the processor 220; and the memory 140 may store an instruction or data, which is associated with the element of the IoT device 200.

The cloud system 300 may be a medium interconnecting the wireless router 100 and the setup device 400. According to an embodiment, the cloud system 300 may be composed of one or more servers.

According to an embodiment, the cloud system 300 may transmit, to the setup device 400, information of the IoT device 200 received from the wireless router 100 and information of the wireless router 100. According to an embodiment, the cloud system 300 may forward, to the wireless router 100, connection information or a request for transmission of connection information from the setup device 400. According to an embodiment, the cloud system 300 may transmit, to the setup device 400 corresponding to account information, information about the IoT device 200 and information about the wireless router 100 by using account information which is received from the wireless router 100 and which is associated with the wireless router 100. According to an embodiment, the plurality of wireless routers 100 may be registered in one account information. According to an embodiment, the cloud system 300 may transmit, to the setup device 400, information about the plurality of wireless routers 100 and information about the plurality of IoT devices 200 respectively connected to the plurality of wireless routers 100. According to an embodiment, the cloud system 300 may delete the wireless router 100 or the IoT device 200, which is registered in the account information, or may additionally register the new wireless router 100 or the new IoT device 200. According to an embodiment, the cloud system 300 may forward, to the wireless router 100, a request for searching for the IoT device 200 from the setup device 400.

According to an embodiment, the cloud system 300 may include a communication interface 310, a processor 320 (e.g., at least one processor), and a memory 330 (e.g., a storage).

The communication interface 310 may be disposed inside the housing of the cloud system 300 and may allow the cloud system 300 to communicate with the wireless router 100 or the setup device 400. According to an embodiment, the communication interface 310 may allow the cloud system 300 to communicate with the wireless router 100 and the setup device 400 by wire or wirelessly.

The processor 320 may be disposed inside the housing and may be operatively connected to the communication interface 310. The processor 320 may control overall operations of the cloud system 300.

The memory 330 may be disposed inside the housing and may be electrically connected to or integrated in the processor 320; and the memory 330 may store an instruction or data, which is associated with the element of the cloud system 300. For example, the memory 330 may store account information, information about the wireless router 100 associated with the account information, information about the IoT device 200 associated with the account information, information about the setup device 400 associated with the account information, and the like.

The setup device 400 may display a screen of the connection accepting request, in response to a connection accepting request received from the cloud system 300 or the wireless router 100, and may transmit connection information to the cloud system 300 or the wireless router 100 based on a user input. For example, the setup device 400 may be a smartphone, a television, a tablet PC, or the like.

According to an embodiment, the setup device 400 may display the screen of the connection accepting request by using an application, and the application may be an installation-type application or a web-based application. The setup device 400 may display the screen of the connection accepting request through a browser.

According to an embodiment, the setup device 400 may transmit a request for the transmission of the connection information to the wireless router 100. According to an embodiment, the setup device 400 may include a wireless communication circuit 410 (e.g., a transceiver), a processor 420 (e.g., at least one processor), a memory 430 (e.g., a storage), an input unit 440 (e.g., an input device), and a display 450.

The wireless communication circuit 410 may be disposed inside the housing of the setup device 400 and may be configured to support a wireless communication protocol. The wireless communication circuit 410 may allow the setup device 400 to communicate with the cloud system 300 or the wireless router 100 wirelessly. The wireless communication protocol of the wireless communication circuit 410 may include at least one of a BT scheme, a Zigbee communication scheme, a wireless HART communication scheme, a near field communication scheme, a Wi-Fi scheme, a Wi-Fi direct scheme, a GSM communication scheme, a HSDPA communication scheme, a LTE communication scheme, a LTE-A communication scheme, a CDMA communication scheme, a CDMA2000 communication scheme, or a WIBRO communication scheme.

The processor 420 may be disposed inside the housing and may be operatively connected to the wireless communication circuit 410. The processor 420 may control overall operations of the setup device 400.

The memory 430 may be disposed inside the housing and may be electrically connected to or integrated in the processor 420; and the memory 430 may store an instruction or data, which is associated with the element of the IoT device 200.

The input unit 440 may obtain an input such as a search requesting input or an authentication accepting input, from a user.

The display 450 may be electrically connected to the processor 420 and may output the execution screen of an application. According to an embodiment, the display 450 may be integrally implemented with a touch panel (e.g., a touch screen panel or the like). In this case, the user may generate a user input by touching the display 450. In other words, in the case where the display 450 is integrally implemented with a touch panel, it is understood that the display 450 performs the functions of an input device and an output device together.

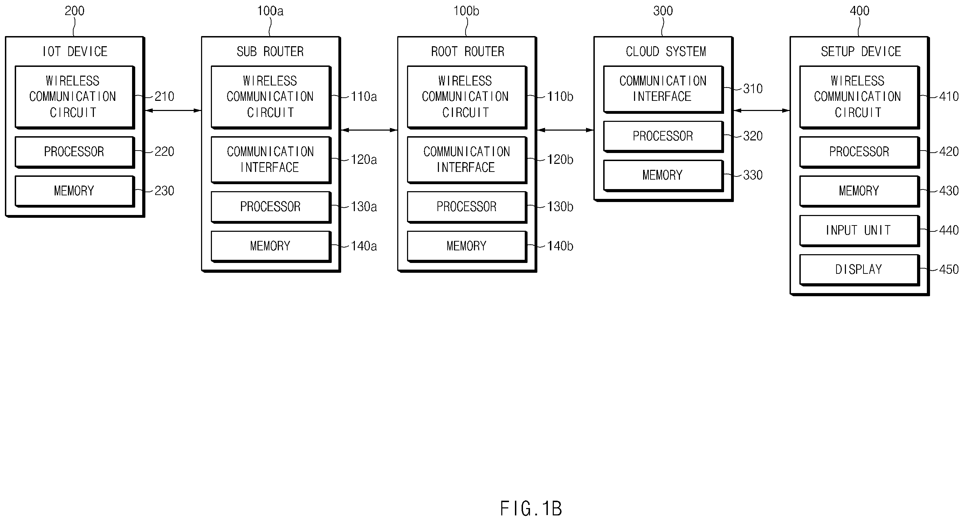

FIG. 1B illustrates a system to which the IoT device 200 is connected, according to an embodiment of the present disclosure.

Referring to FIG. 1B, the system to which the IoT device 200 is connected may include a configuration as illustrated in FIG. 1B. Referring to FIG. 1B, the system may include a sub router 100a, a root router 100b, the IoT device 200, the cloud system 300, and the setup device 400.

The sub router 100a may serve as a bridge between the IoT device 200 and the root router 100b. The sub router 100a may connect to the IoT device 200 by using a wireless communication circuit 110a (e.g., a transceiver) and may connect to the root router 100b through the wireless communication circuit 110a or a communication interface 120a. That is, the sub router 100a may perform a role similar to the role of the wireless router 100 of FIG. 1A. According to an embodiment, the sub router 100a may include the wireless communication circuit 110a, the communication interface 120a, a processor 130a (e.g., at least one processor), and a memory 140a (e.g., a storage). Since the elements respectively corresponds to the wireless communication circuit 110, the communication interface 120, the processor 130, and the memory 140 of the above-described the wireless router 100, the detailed descriptions about the elements will not be repeated here.

The root router 100b may serve as a bridge between the sub router 100a and the cloud system 300. According to an embodiment, the root router 100b may include a wireless communication circuit 110b (e.g., a transceiver), a communication interface 120b, a processor 130b (e.g., at least one processor), and a memory 140b (e.g., a storage). The root router 100b may connect to the sub router 100a through the wireless communication circuit 110b or the communication interface 120b, and may connect to the cloud system 300 through the communication interface 120b. That is, the root router 100b may also perform a role similar to the role of the wireless router 100 of FIG. 1A. Since the elements respectively corresponds to the wireless communication circuit 110, the communication interface 120, the processor 130, and the memory 140 of the above-described the wireless router 100, the detailed descriptions about the elements will not be repeated here.

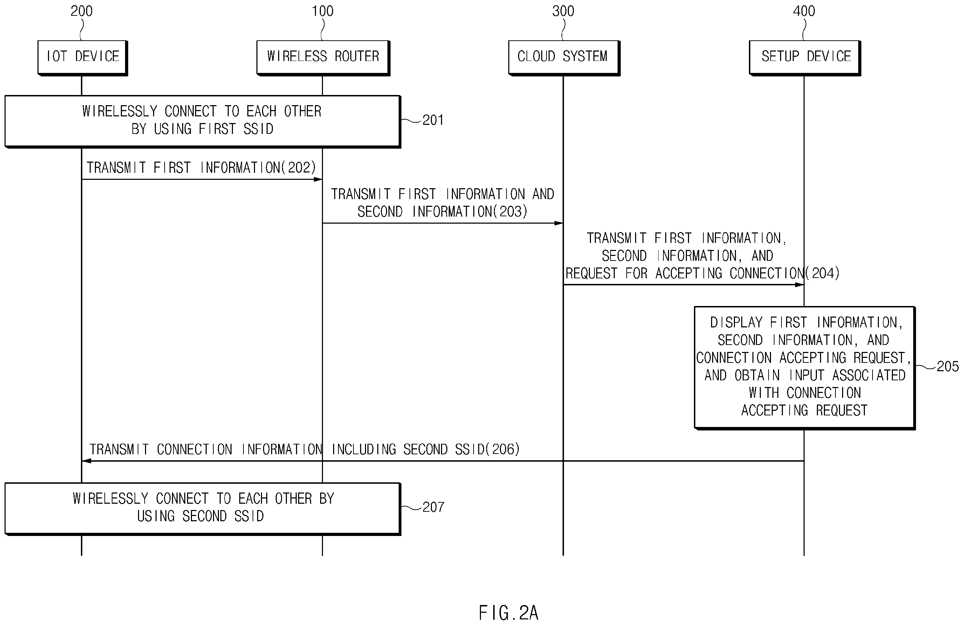

Hereinafter, a process in which the IoT device 200 is connected to the wireless router 100 will be described based on the above-described configuration with reference to FIGS. 2A to 2E, 3, 4, 5A and 5B, 6, 7A and 7B, 8, 9A and 9B, and 10 to 15.

Below, the wireless router 100, the IoT device 200, the cloud system 300, and the setup device 400 may include all or part of configuration of the wireless router 100, the IoT device 200, the cloud system 300, and the setup device 400 illustrated in FIG. 1A. According to various embodiments, the wireless router 100 may be replaced with the sub router 100a and the root router 100b illustrated in FIG. 1B.

Hereinafter, it is assumed that the processor of each of the wireless router 100, the IoT device 200, the cloud system 300, and the setup device 400 performs an operation based on commands or instructions stored in the memory of each of the devices. In addition, it is assumed that each of the devices communicates with each other by using a wireless communication circuit or through a communication interface.

Hereinafter, a process in which the IoT device 200 wirelessly connects to the wireless router 100 by using a received service set identifier (SSID) will be described with reference to FIGS. 2A to 2E.

FIG. 2A is a flowchart illustrating a process in which the IoT device 200 is connected to the wireless router 100, according to an embodiment of the present disclosure.

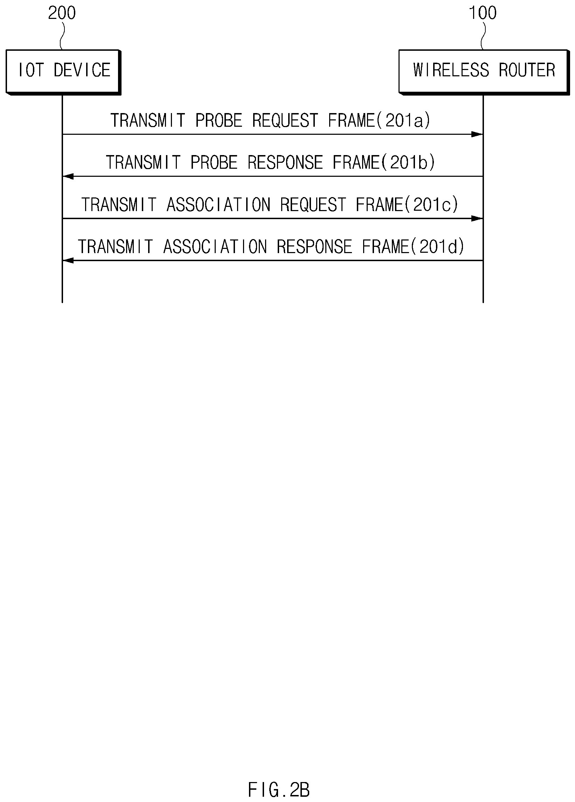

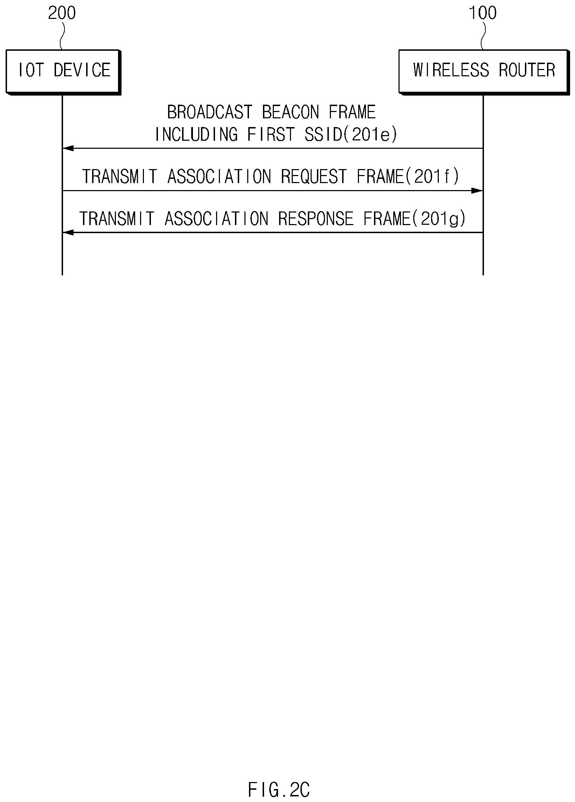

Referring to FIG. 2A, in operation 201, the wireless router 100 and the IoT device 200 may be wirelessly connected to each other by using a first SSID. According to an embodiment, the first SSID may be a preset identifier of the wireless router 100. According to an embodiment, the IoT device 200 that is connected to the wireless router 100 by using the first SSID may receive a permission to access a preset uniform resource locator (URL) or may communicate with the cloud system 300, through the wireless router 100. Hereinafter, the detailed wireless connection process will be described with reference to FIGS. 2B and 2C.

In operation 202, the IoT device 200 may transmit first information about the IoT device 200 to the wireless router 100. According to an embodiment, before the IoT device 200 is connected to the wireless router 100, the IoT device 200 may transmit the first information. This will be described with reference to FIGS. 2B and 2C.

According to an embodiment, the first information may include at least one of manufacturer information of the IoT device 200, a model name of the IoT device 200, a device name of the IoT device 200, a version name of the IoT device 200, a product group of the IoT device 200, the serial number of the IoT device 200 such as a manufacturing number, authentication information for network connection, media access control (MAC) address, or Internet protocol (IP) address.

In operation 203, the wireless router 100 may transmit at least part of the received first information and second information about the wireless router 100 to the cloud system 300. According to an embodiment, the second information may include at least one of a manufacturer of the wireless router 100, a model name of the wireless router 100, a version name of the wireless router 100, a serial number of the wireless router 100, a registration number of the wireless router 100, MAC address of the wireless router 100, information about a location at which the wireless router 100 is installed, or one or more pieces of account information corresponding to the wireless router 100.

According to an embodiment, the second information may include a second SSID. The second SSID may be an identifier for wireless connection to the wireless router 100; and the IoT device 200 connected to the wireless router 100 by using the second SSID may communicate with an external network through the wireless router 100. According to an embodiment, the second information may further include at least one of a password corresponding to the second SSID, security information, or credential information for the connection of the passpoint (e.g., a wireless router) 100.

According to an embodiment, the wireless router 100 may store a history of the wireless connection to the plurality of IoT devices 200, in the memory 140. In the case it is determined based on the first information received in operation 202 and the wireless connection history that the connected IoT device 200 has not been connected previously, the wireless router 100 may transmit at least part of the first information and the second information to the cloud system 300. In other words, according to an embodiment, even in the case where the IoT device 200 is newly connected, the wireless router 100 may perform a process of the connection of the IoT device 200.

In operation 204, the cloud system 300 may transmit at least part of the first information, at least part of the second information, and a request for accepting the connection between the IoT device 200 and the wireless router 100, to the at least one or more setup devices 400 based on the second information.

According to an embodiment, the cloud system 300 may determine the setup device 400, which will transmit an authentication request, based on the second information. For example, the cloud system 300 may transmit at least part of the first information, at least part of the second information, and the connection accepting request, to the one or more setup devices 400 corresponding to the account information of the wireless router 100 included in the second information. According to an embodiment, in the case where the second information does not include the account information, the cloud system 300 may obtain the account information of the wireless router 100, based on information (e.g., a serial number, a device registration number, MAC address, or the like) included in the second information and may transmit at least part of the first information, at least part of the second information, and the connection accepting request, to the one or more setup devices 400 corresponding to the account information.

According to an embodiment, in the case where the setup devices 400 corresponding to the account information are plural, the cloud system 300 may transmit at least part of the first information, at least part of the second information, and the connection accepting request, to the one or more setup devices 400, which are being used, from among the plurality of the setup devices 400. The cloud system 300 may transmit a query for checking whether the setup device 400 is being used, to the plurality of setup devices 400 corresponding to the account information. The cloud system 300 may receive a response to the query and may transmit at least part of the first information, at least part of the second information, and the connection accepting request, to the setup device 400, which is determined as being used, from among the plurality of setup devices 400 based on the response to the query.

For example, in the case where a television and a tablet PC are the setup devices 400 corresponding to the account information, the cloud system 300 may transmit a query for checking whether the television and the tablet PC are being used as the television and the tablet PC. In the case where the cloud system 300 receives a response saying that the tablet PC is being used, from the tablet PC, the cloud system 300 may transmit at least part of the first information, at least part of the second information, and the connection accepting request, to only the tablet PC.

According to an embodiment, in the case where the setup devices 400 corresponding to the account information are plural and the plurality of setup devices 400 are different types of the setup devices 400, the cloud system 300 may transmit at least part of different types of the first information, at least part of the second information, and the connection accepting request, to each of the setup devices 400. For example, in the case where the setup device 400 is the television, the cloud system 300 may transmit a message saying that "accept the connection by pressing the blue button on a remote controller". For another example, in the case where the setup device 400 is a portable terminal, the setup device 400 may transmit a user interface (UI) message that is capable of obtaining a connection acceptance input through a touch screen.

According to an embodiment, the cloud system 300 may store a wireless connection history between the wireless router 100 and the IoT device 200. The cloud system 300 may search for the history of the IoT device 200 based on the received first information. As such, the cloud system 300 may check whether the IoT device 200 is a normal product, and may prevent an abnormal network connection, hacking, or the like. According to an embodiment, the cloud system 300 may delete the history of the IoT device 200.

In operation 205, the setup device 400 may display at least part of the first information, at least part of the second information, and the connection accepting request in a display and may obtain an input associated with the connection accepting request. For example, the setup device 400 may display information of the IoT device 200 making a request for the wireless connection and information of the wireless router 100 receiving the request for the wireless connection, and may display a UI including a message for querying whether to accept the connection, and an object for obtaining the input associated with the connection accepting request. For another example, the setup device 400 may output the information of the IoT device 200 making a request for the wireless connection and the information of the wireless router 100 receiving the request for the wireless connection, through an output interface (e.g., a speaker) of the setup device 400 and may obtain the input associated with the connection accepting request, through an input interface (e.g., a microphone) of the setup device 400.

In operation 206, the setup device 400 may transmit connection information including the second SSID for the wireless connection between the IoT device 200 and the wireless router 100, to the IoT device 200 based on the input associated with the connection accepting request. At this time, the cloud system 300 and the wireless router 100 may forward the connection information transmitted by the setup device 400, to the IoT device 200.

According to an embodiment, in the case where the setup device 400 obtains an input for accepting the connection, the setup device 400 may transmit the connection information including the second SSID to the IoT device 200. In the case where the setup device 400 obtains an input for rejecting the connection, the setup device 400 may transmit a connection rejecting message to at least one of the IoT device 200, the wireless router 100, or the cloud system 300.

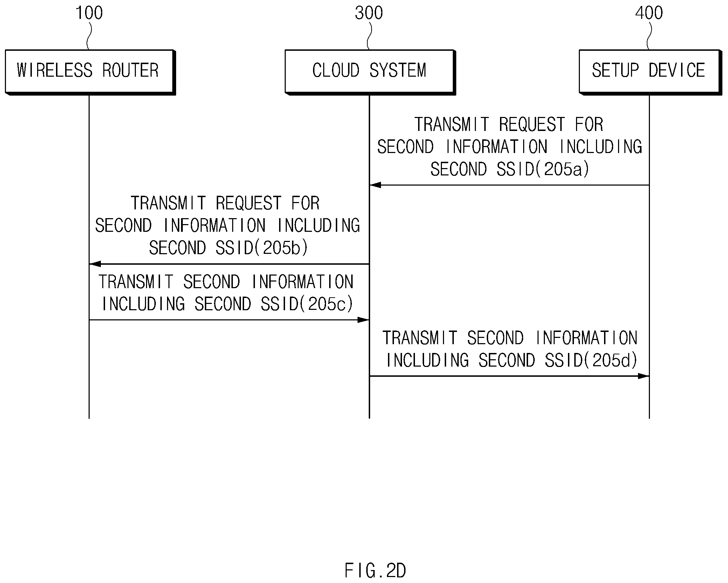

According to an embodiment, in operation 204, the second information transmitted to the setup device 400 by the cloud system 300 may not include the second SSID. In this case, the setup device 400 may transmit the connection information to the IoT device 200 by using the second SSID of the wireless router 100 stored in the memory 430. According to an embodiment, the memory 430 of the setup device 400 may not store the second SSID. In this case, the setup device 400 may request the second information including the second SSID. This will be described with reference to FIG. 2D.

According to an embodiment, the connection information transmitted by the setup device 400 may include at least one of a password corresponding to the second SSID, security information, or credential information for the connection of the passpoint 100.

For example, the security information may include information (e.g., Wpa2-psk, 802.1x, or the like) about an authentication scheme to be used when the IoT device 200 connects to the wireless router 100.

For example, the credential information may include at least one of information associated with the root certification authority, which the wireless router 100 trusts, information for public key cryptographic algorithms, a public key certificate issued by accredited certification authorities, online sign-up for the wireless router 100, and roaming consortium information.

For another example, the credential information may refer to information for accepting, by the wireless router 100, the network connection of the IoT device 200. According to an embodiment, the credential information may be different for each IoT device 200. For example, the credential information may be different for each product group of the IoT device 200.

According to an embodiment, a mutual authentication process between the setup device 400 and the IoT device 200 and a security channel establishing operation between the setup device 400 and the IoT device 200 may be performed before the setup device 400 transmits the connection information.

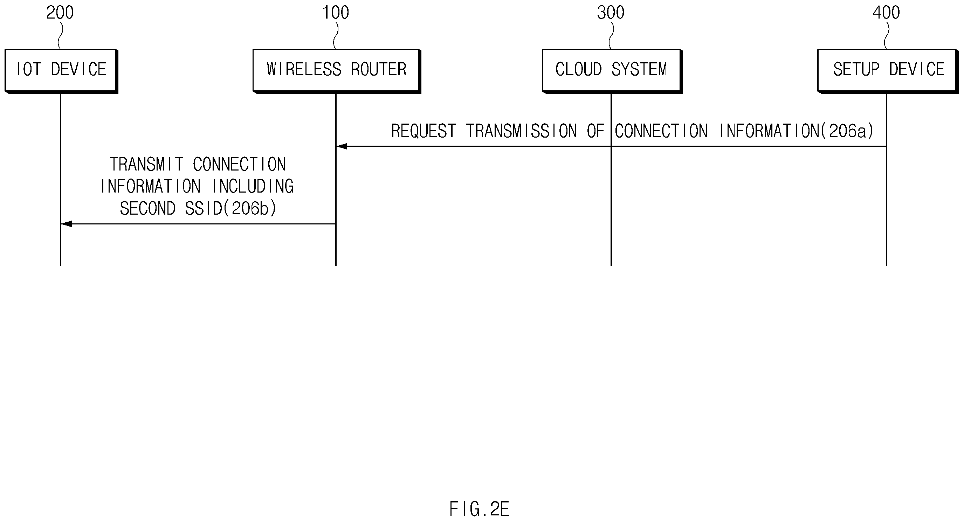

According to an embodiment, in the case where the setup device 400 obtains an input for accepting the connection, the setup device 400 may transmit a transmission request of the connection information, to the wireless router 100. This will be described with reference to FIG. 2E.

In operation 207, the wireless router 100 and the IoT device 200 may be wirelessly connected to each other by using the second SSID included in the connection information.

According to an embodiment, the IoT device 200 connected to the wireless router 100 by using the second SSID may communicate with an external Internet or the like as well as a preset URL or the cloud system 300.

According to an embodiment, the wireless router 100 may determine the connection permission of the IoT device 200 based on the credential information and may control the network connection of the IoT device 200 depending on the determined connection permission. For example, the wireless router 100 may allow the IoT device 200, which receives first credential information, to use all of external networks and to have a high priority for traffic. For another example, the wireless router 100 may allow the IoT device 200, which receives second credential information, to use only an external Internet (e.g., http) and to have a low priority for traffic.

According to an embodiment, the wireless router 100 may notify the setup device 400 that the IoT device 200 has been connected by using the second SSID.

FIG. 2B is a flowchart illustrating a process in which the IoT device 200 and the wireless router 100 establish wireless connection, according to an embodiment. FIG. 2C is a flowchart illustrating a process in which the IoT device 200 and the wireless router 100 establish wireless connection, according to another embodiment.

According to an embodiment, the wireless connection corresponding to operation 201 may be established depending on the process illustrated in FIG. 2B or 2C.

FIG. 2B illustrates the case where the IoT device 200 triggers the wireless connection according to an embodiment of the present disclosure.

Referring to FIG. 2B, in operation 201a, the IoT device 200 may transmit a probe request frame to the wireless router 100. According to an embodiment, the IoT device 200 may transmit the probe request frame to the wireless router 100 when power is turned on, or may periodically transmit the probe request frame to the wireless router 100. The transmitting of the probe request frame may be searching for the wireless router 100; the probe request frame may include a preset first SSID, and the first SSID may be a hidden SSID. According to an embodiment, the IoT device 200 may transmit the probe request frame including first information about the IoT device 200. For example, the first information may be included in a vendor specific information element (VSIE) area of the probe request frame.

In operation 201b, the wireless router 100 may transmit a probe response frame to the IoT device 200. According to an embodiment, in the case where the first SSID is a hidden SSID, the wireless router 100 may transmit the probe response frame to the IoT device 200 in response to only the probe request frame including the preset first SSID. According to an embodiment, the wireless router 100 may verify the first information about the IoT device 200 from the VSIE area of the probe request frame and may determine whether to transmit the probe response frame, based on the information of the IoT device 200.

In operation 201c, the IoT device 200 may transmit an association request frame to the wireless router 100. According to an embodiment, the IoT device 200 may transmit the association request frame including first information about the IoT device 200. For example, the first information may be included in a VSIE area of the association request frame.

According to an embodiment, the association request frame may be a frame for network connection, and the wireless router 100 may determine a resource for the IoT device 200 and a capability to be used for communication through an association process in consultation with the IoT device 200. The association request frame may include information about radio network interface card (NIC) of the IoT device 200, SSID, and the like.

In operation 201d, the wireless router 100 may transmit an association response frame to the IoT device 200. The wireless connection between the IoT device 200 and the wireless router 100 may be established by transmitting the association response frame.

According to an embodiment, the wireless router 100 may obtain the first information from the probe request frame or the association request frame; in the case where the probe request frame or the association request frame includes the first information, operation 202 of FIG. 2A may be skipped.

FIG. 2C illustrates the case where the wireless router 100 triggers a wireless connection according to an embodiment of the present disclosure.

Referring to FIG. 2C, in operation 201e, the wireless router 100 may broadcast a beacon frame including a first SSID.

In operation 201f, the IoT device 200 receiving the beacon frame may transmit an association request frame to the wireless router 100. According to an embodiment, the IoT device 200 may transmit the association request frame including first information about the IoT device 200. For example, the first information may be included in a VSIE area of the association request frame.

In operation 201g, the wireless router 100 may transmit an association response frame to the IoT device 200. The wireless connection between the IoT device 200 and the wireless router 100 may be established by transmitting the association response frame.

According to an embodiment, the wireless router 100 may obtain the first information from the association request frame received from the IoT device 200; in the case where the association request frame includes the first information, operation 202 of FIG. 2A may be skipped.

FIG. 2D is a flowchart illustrating a process in which the setup device 400 requests second information and receives the second information, according to an embodiment of the present disclosure.

According to an embodiment, in operation 204, the setup device 400 may receive the second information that does not include a second SSID.

In this case, referring to FIG. 2D, in operation 205a, the setup device 400 may transmit a request for the second information including the second SSID, to the cloud system 300.

In operation 205b, the cloud system 300 may transmit the request for the second information including the second SSID, to the wireless router 100.

In operation 205c, the wireless router 100 may transmit the second information including the second SSID, to the cloud system 300.

In operation 205d, the cloud system 300 may transmit the second information including the second SSID, to the setup device 400.

In operation 206 of FIG. 2A, the setup device 400 may transmit the connection information to the IoT device 200 by using the received second information including the second SSID.

FIG. 2E is a flowchart illustrating a process in which the wireless router 100 transmits connection information to the IoT device 200 depending on a transmission request of connection information, according to an embodiment of the present disclosure.

According to an embodiment, the setup device 400 may not transmit the connection information but transmit a transmission request of the connection information to the wireless router 100, and the wireless router 100 may transmit the connection information to the IoT device 200. For example, the connection information may be a result of the connection accepting request, which is transmitted such that the IoT device 200 accesses the wireless router 100.

Referring to FIG. 2E, in operation 206a, the setup device 400 may transmit the transmission request of the connection information to the wireless router 100. In this case, the cloud system 300 may forward the transmission request of the connection information, which the setup device 400 transmits, to the wireless router 100.

In operation 206b, the wireless router 100 may transmit the connection information including a second SSID.

According to an embodiment, a mutual authentication process between the wireless router 100 and the IoT device 200 and an operation of establishing a security channel between the wireless router 100 and the IoT device 200 may be performed before the wireless router 100 transmits the connection information.

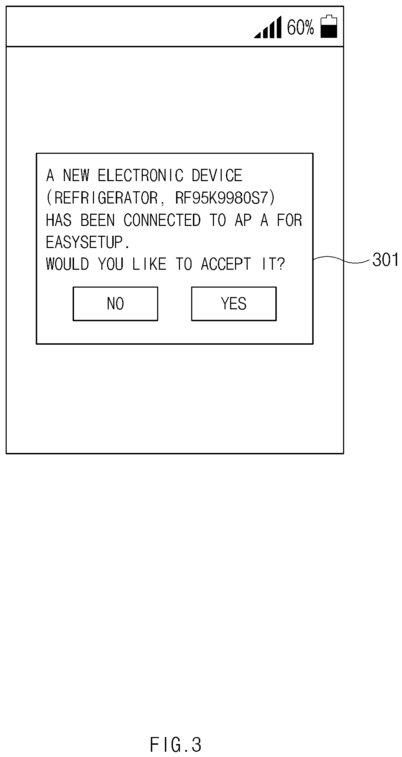

Hereinafter, a screen which the setup device 400 displays depending on an embodiment of operation 201 to operation 207 will be described with reference to FIGS. 3, 4, 5A, and 5B.

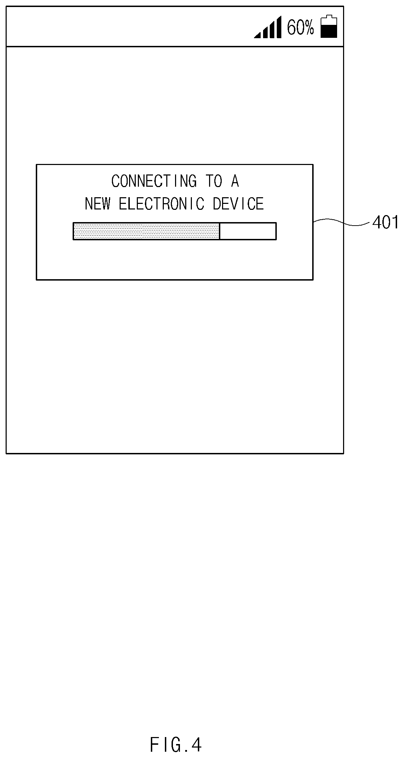

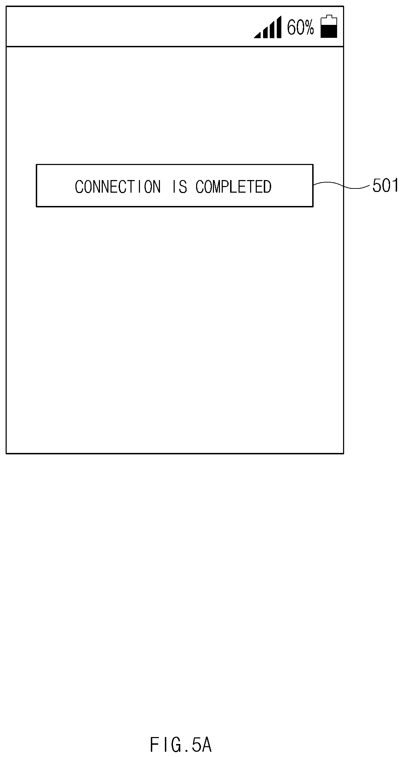

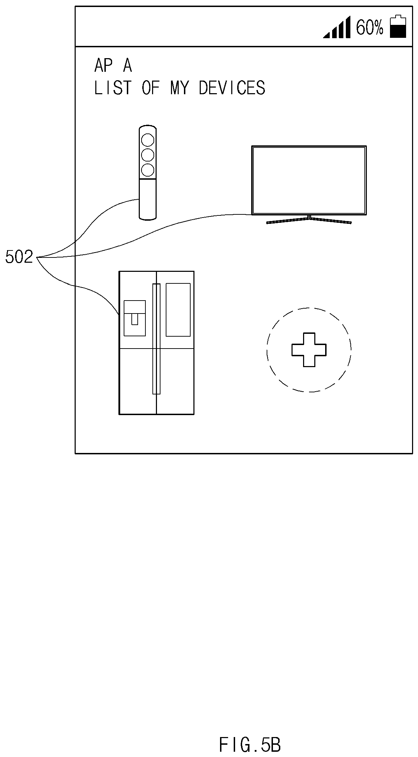

FIG. 3 illustrates a screen displayed by the setup device 400 receiving an authentication request, according to an embodiment of the present disclosure. FIG. 4 illustrates a screen displayed by the setup device 400 that transmits connection information, according to an embodiment of the present disclosure. FIG. 5A illustrates a screen displayed by the setup device 400 after the IoT device 200 is connected to the wireless router 100, according to an embodiment of the present disclosure. FIG. 5B illustrates a screen in which the setup device 400 displays a list of IoT devices 200 connected to the wireless router 100, according to an embodiment of the present disclosure.

After operation 201 to operation 204, in operation 205, as illustrated in FIG. 3, the setup device 400 may display a UI 301 including at least part of first information (e.g., a type (refrigerator) of the IoT device 200, a serial number (RF95K9980S7) of the IoT device 200, or the like), at least part of second information (e.g., a name (AP A) of the wireless router 100), a message for querying whether to accept the connection, and an object for obtaining an input associated with a connection accepting request. Although not illustrated, the setup device 400 may further display the received first information and the received second information, for example, a product group or a model name of the IoT device 200, the location information of the wireless router 100, and the like.

In operation 205, in the case where the setup device 400 obtains an input for accepting the connection, in operation 206, after transmitting the connection information, the setup device 400 may display a screen displaying a connection progress status 401 as illustrated in FIG. 4, until the IoT device 200 is connected to the wireless router 100 by using a second SSID.

In operation 207, after the IoT device 200 is wirelessly connected to the wireless router 100 by using the second SSID, the setup device 400 may receive information about the fact that the IoT device 200 has been connected by using the second SSID. The setup device 400 may display a connection complete message 501, as illustrated in FIG. 5A, in response to the reception of the information. As illustrated in FIG. 5B, the setup device 400 may display a list 502 of the IoT device 200, which is connected to the wireless router 100 by using the second SSID, together with the information of the wireless router 100. For example, the list 502 may be displayed by providing a visual effect (e.g., an icon, a text, a color, or the like) to the IoT device 200 newly added.

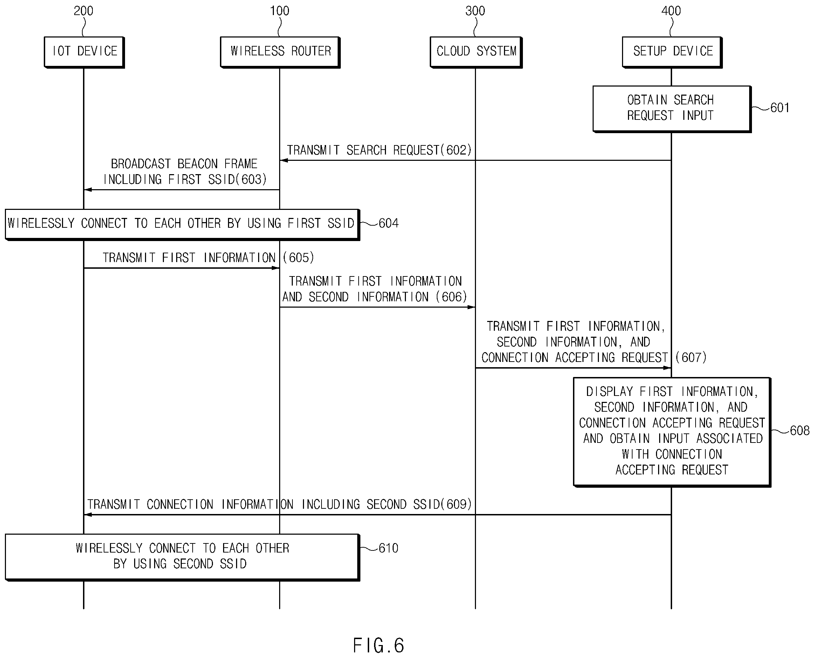

Hereinafter, a process in which the IoT device 200 is connected to the wireless router 100 depending on a search request of the setup device 400 will be described with reference to FIG. 6.

FIG. 6 is a flowchart illustrating a process in which the IoT device 200 is connected to the wireless router 100 depending on a request of the setup device 400, according to an embodiment of the present disclosure.

Referring to FIG. 6, in operation 601, the setup device 400 may obtain a search request input for searching for the IoT device 200. According to an embodiment, the setup device 400 may obtain the search request input for searching for the IoT device 200 at a periphery of one of the plurality of wireless routers 100.

In operation 602, the setup device 400 may transmit a search request to the wireless router 100, in response to the obtaining of the search request input. At this time, the cloud system 300 may forward the search request, which the setup device 400 transmits, to the wireless router 100.

In operation 603, the wireless router 100 may broadcast a beacon frame including a first SSID for scanning the IoT device 200, in response to the reception of the search request. Operation 603 may correspond to operation 201e of FIG. 2C.

In operation 604, the wireless router 100 and the IoT device 200 may be wirelessly connected to each other by using the first SSID. In operation 603, since the beacon frame including the first SSID is broadcast, operation 604 may correspond to operation 201f and operation 201g of FIG. 2C.

In operation 605, the IoT device 200 may transmit first information about the IoT device 200 to the wireless router 100.

In operation 606, the wireless router 100 may transmit at least part of the received first information and second information about the wireless router 100 to the cloud system 300.

In operation 607, the cloud system 300 may transmit at least part of the first information, at least part of the second information, and a request for accepting the connection between the IoT device 200 and the wireless router 100, based on the second information. According to an embodiment, the cloud system 300 may transmit, to the setup device 400 transmitting the search request, at least part of the first information, at least part of the second information, and the request for accepting the connection between the IoT device 200 and the wireless router 100.

In operation 608, the setup device 400 may display at least part of the first information, at least part of the second information, and the connection accepting request, in a display and may obtain an input associated with the connection accepting request.

In operation 609, the setup device 400 may transmit connection information including a second SSID for the wireless connection between the IoT device 200 and the wireless router 100, to the IoT device 200 based on the input associated with the connection accepting request.

According to an embodiment, in the case where the memory of the setup device 400 does not store the second SSID and the setup device 400 does not receive the second SSID from the cloud system 300, as described with reference to FIG. 2D, the setup device 400 may request second information including the second SSID to obtain the second SSID.

According to an embodiment, as described with reference to FIG. 2E, the setup device 400 may transmit a transmission request of connection information to the wireless router 100, and the wireless router 100 may transmit the connection information to the IoT device 200.

In operation 610, the wireless router 100 and the IoT device 200 may be wirelessly connected to each other by using the second SSID included in the connection information.

It is understood that operation 605 to operation 610 correspond to operation 202 to operation 207 and embodiments described in details about operation 202 to operation 207 are applied to operation 605 to operation 610.

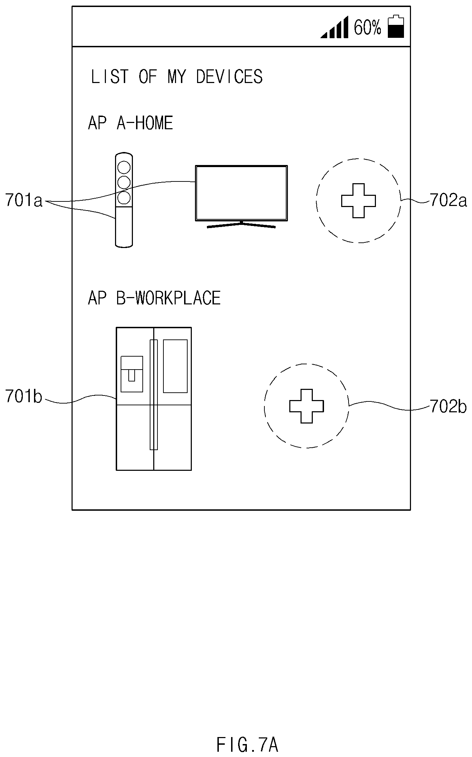

Hereinafter, a screen displayed by the setup device 400 depending on an embodiment of operation 601 to operation 610 will be described with reference to FIGS. 7A, 7B, 8, 9A, 9B, and 10.

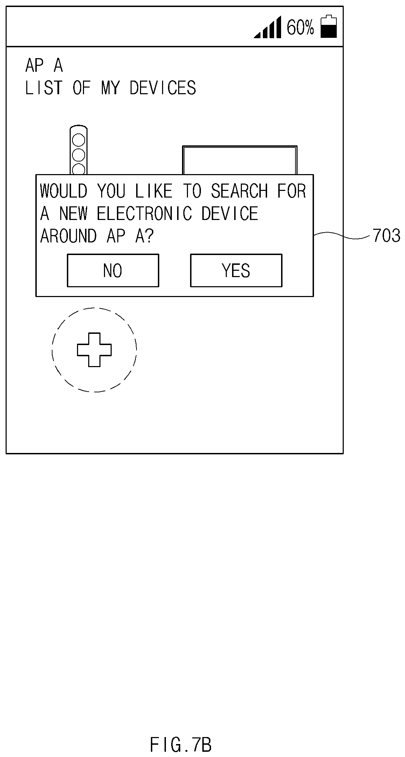

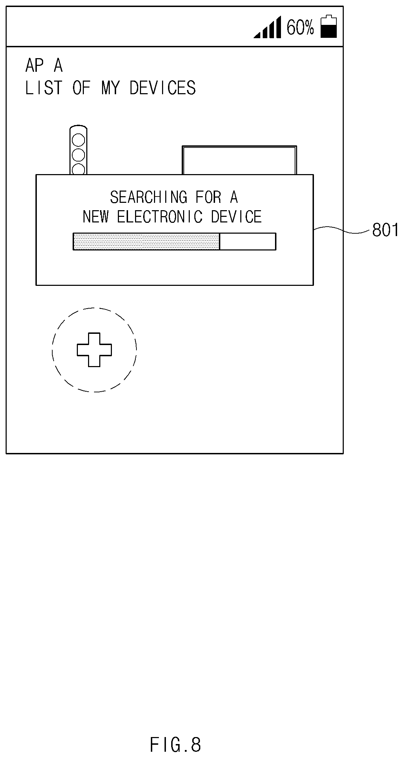

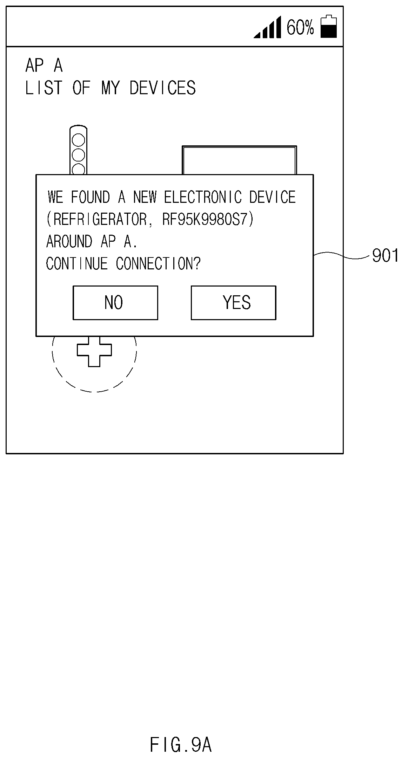

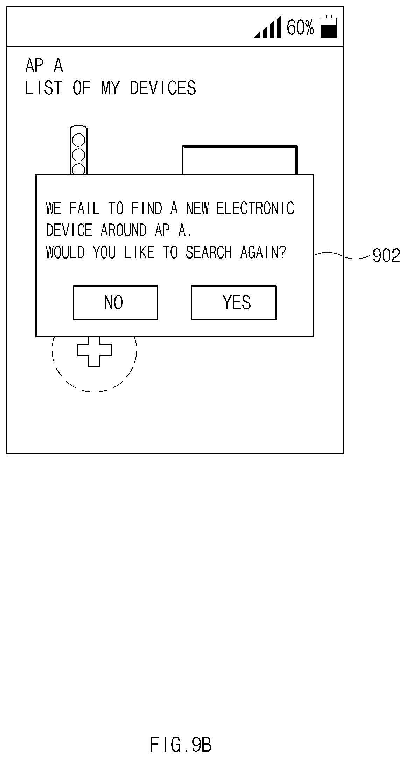

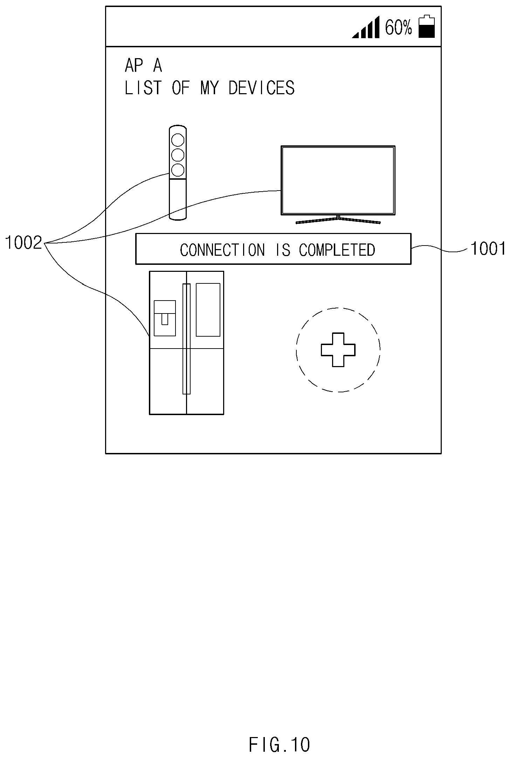

FIG. 7A illustrates a screen in which the setup device 400 displays a list of IoT devices 200 connected to the wireless router 100, according to an embodiment of the present disclosure. FIG. 7B illustrates a screen displayed by the setup device 400 to transmit a request signal for searching for the new IoT device 200, according to an embodiment of the present disclosure. FIG. 8 illustrates a screen displayed by the setup device 400 after the setup device 400 transmits a search request signal, according to an embodiment of the present disclosure. FIG. 9A illustrates a screen displayed by a user terminal receiving a connection accepting request, according to an embodiment of the present disclosure. FIG. 9B illustrates a screen displayed by a user terminal receiving a message saying that the IoT device 200 is not found, according to an embodiment of the present disclosure. FIG. 10 illustrates a screen in which a user terminal displays a list of IoT devices 200 after an IoT device 200 is connected to the wireless router 100, according to an embodiment of the present disclosure.

In operation 601, as illustrated in FIG. 7A, the setup device 400 may display information (e.g., a name (e.g., AP 'A' and AP 'B') and a location of each of the wireless routers 100) of the plurality of wireless routers 100 registered in account information corresponding to the setup device 400, and a list 701a or 701b (e.g., the IoT devices 200 connected to AP 'A' are an air conditioner and a television, and the IoT device 200 connected to AP 'B' is a refrigerator) of the IoT devices 200 respectively connected to the plurality of wireless routers 100. The setup device 400 may display an object 702a or 702b for obtaining a search request input of a wireless router and may obtain the search request input through the object. For another example, although not illustrated in FIG. 7A, the setup device 400 may display an object for transmitting a search request to all of the plurality of wireless routers 100 registered in account information and may obtain an input for transmitting the search request to all of the plurality of wireless routers 100, through the object.

According to an embodiment, after obtaining the search request input through the object 702a for searching for the new IoT device 200 at a periphery of AP 'A', as illustrated in FIG. 7B, the setup device 400 may further display a UI including a query message 703 for determining whether the search request is present. The setup device 400 may obtain an input for verifying the search request, through the UI.

In operation 601, after obtaining the search request input through the object 702a for searching for the IoT device 200 at a periphery of AP 'A', in operation 602, the setup device 400 may transmit the search request to AP 'A'. According to an embodiment, until a connection accepting request is received after transmitting the search request, as illustrated in FIG. 8, the setup device 400 may display a screen indicating a search progress status 801.

In operation 603, AP 'A' may broadcast a beacon frame including a first SSID, and, in operation 604, AP 'A' may be connected wirelessly to a refrigerator being the new IoT device. In operation 605, the refrigerator being the IoT device 200 may transmit first information (e.g., a type (refrigerator) or a serial number (RF95K9980S7) of the IoT device 200) about the refrigerator, to AP 'A'.

In operation 606, AP 'A' may transmit information of the refrigerator and information of AP 'A' to the cloud system 300. In operation 607, the cloud system 300 may transmit information of the detected IoT device 200 (e.g., a refrigerator), information of the wireless router 100 performing the search, and the connection accepting request, to the setup device 400 corresponding to account information of AP 'A' or the setup device 400 transmitting the search request. In operation 608, as illustrated in FIG. 9A, the setup device 400 may display a UI 901 including information about the refrigerator (e.g., a type (refrigerator) of the IoT device 200, a serial number (RF95K9980S7) of the IoT device 200, or the like), information about AP 'A' (e.g., a name (AP 'A') of the wireless router 100), a message for querying whether to accept the connection, and an object for obtaining an input associated with the connection accepting request. Although not illustrated, the setup device 400 may further display the information about the IoT device 200 (e.g., a refrigerator), that receives a product group or a model name of the IoT device 200, the location information of the wireless router 100, and the like, and the information about the wireless router 100 (e.g., AP 'A').

According to an embodiment, in operation 604, in the case where the new IoT device 200 is not connected to the wireless router 100 (e.g., in the case where an IoT device is not found within a specific time), the wireless router 100 may transmit a message saying that the new IoT device 200 is absent, to the cloud system 300, and the cloud system 300 may transmit the received message to the setup device 400. The setup device 400 may display a message saying that the new IoT device 200 is not found, as illustrated in FIG. 9B, and a UI 902 for obtaining a re-search request input.

According to an embodiment, in the case where the setup device 400 obtains a connection acceptance input in operation 608 (e.g., if receiving an input of 'YES' in FIG. 9A), in operation 609, the setup device 400 may transmit connection information including a second SSID to a refrigerator being the IoT device 200 newly connected. In operation 610, the refrigerator and AP 'A' may be connected wirelessly to each other by using the second SSID.

After the refrigerator and AP 'A' are connected wirelessly to each other by using the second SSID, the setup device 400 may receive information about the fact that the refrigerator has been connected to AP 'A' by using the second SSID. As illustrated in FIG. 10, the setup device 400 may display a connection complete message 1001 and a list 1002 of the IoT devices 200 connected to the wireless router 100 (e.g., AP 'A'). For example, the setup device 400 may display information of the IoT devices 200 (e.g., an air conditioner and a TV), which are connected previously, and the IoT device 200 newly connected (e.g., a refrigerator). According to an embodiment, the setup device 400 may display the list 1002 by providing a visual effect (e.g., an icon, a text, a color, or the like) to the device newly added.

Hereinafter, in the case where the setup device 400 is connected to the wireless router 100 directly and wirelessly, a process in which the IoT device 200 is connected to the wireless router 100 will be described with reference to FIGS. 3, 4, 5A, 5B and 11.

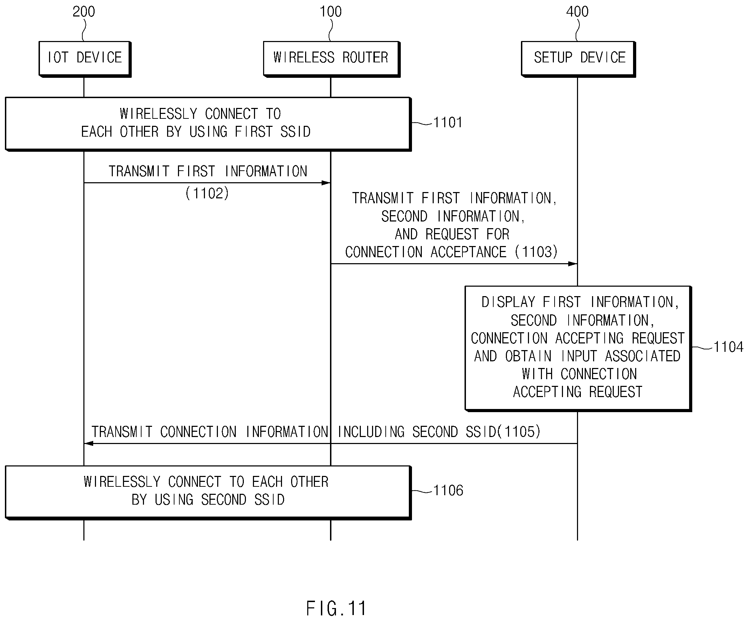

FIG. 11 is a flowchart illustrating a process in which the IoT device 200 is connected to the wireless router 100, according to an embodiment of the present disclosure.

In operation 1101, the wireless router 100 and the IoT device 200 may be wirelessly connected to each other by using a first SSID. According to an embodiment, the IoT device 200 that is connected to the wireless router 100 over a wireless network having the first SSID may receive a permission to access a preset URL or may communicate with the cloud system 300, through the wireless router 100.

In operation 1102, the IoT device 200 may transmit first information about the IoT device 200 to the wireless router 100. According to an embodiment, before being connected to the wireless router 100, the IoT device 200 may transmit the first information. This is described with reference to FIGS. 2B and 2C.

In operation 1103, the wireless router 100 may transmit at least part of first information, second information about the wireless router 100, and a request for connection acceptance between the IoT device 200 and the wireless router 100, to the setup device 400. According to an embodiment, the setup device 400 may be the setup device 400 that is connected to the wireless router 100 directly and wirelessly. In the case where the plurality of setup devices 400 are connected to the wireless router 100, the wireless router 100 may transmit at least part of the first information, the second information, and the request for connection acceptance between the IoT device 200 and the wireless router 100, to all or some of the plurality of setup devices 400. According to an embodiment, the wireless router 100 may transmit at least part of the first information, the second information, and the connection accepting request to the one or more setup devices 400, which are being used, from among the plurality of setup devices 400.

In operation 1104, the setup device 400 may display at least part of the first information, at least part of the second information, and the connection accepting request, in a display and may obtain an input associated with the connection accepting request. For example, as illustrated in FIG. 3, the setup device 400 may display a UI 301 including the first information (e.g., a type (refrigerator) of the IoT device 200, a serial number (RF95K9980S7) of the IoT device 200, or the like), the second information (e.g., a name (AP 'A') of the wireless router 100), a message for querying whether to accept the connection, and an object for obtaining an input associated with a connection accepting request.

In operation 1105, the setup device 400 may transmit connection information including the second SSID for the wireless connection between the IoT device 200 and the wireless router 100, to the IoT device 200 based on the input associated with the connection accepting request. At this time, the wireless router 100 may forward the connection information transmitted by the setup device 400, to the IoT device 200.

According to an embodiment, in operation 1103, the second information transmitted to the setup device 400 by the wireless router 100 may not include the second SSID. In this case, the setup device 400 may transmit the connection information to the IoT device 200 by using the second SSID of the wireless router 100 stored in the memory 430. According to an embodiment, the memory 430 of the setup device 400 may not store the second SSID. In this case, the setup device 400 may transmit the request for the second information including the second SSID, to the wireless router 100. The wireless router 100 may transmit the second information including the second SSID, to the setup device 400 in response to the request.

According to an embodiment, a mutual authentication process between the setup device 400 and the IoT device 200 and a security channel establishing operation may be performed before the setup device 400 transmits the connection information.

According to an embodiment, in the case where the setup device 400 obtains an input for accepting the connection, the setup device 400 may transmit a transmission request of the connection information, to the wireless router 100. For example, the setup device 400 may not transmit the connection information but transmit a transmission request of the connection information to the wireless router 100 and the wireless router 100 may transmit the connection information to the IoT device 200. In this case, a mutual authentication process between the wireless router 100 and the IoT device 200 and a security channel establishing operation may be performed before the wireless router 100 transmits the connection information.

According to an embodiment, in the case where the setup device 400 obtains an input for accepting the connection, in operation 1105, after transmitting the connection information, the setup device 400 may display a screen displaying the connection progress status 401 as illustrated in FIG. 4, until the IoT device 200 is connected to the wireless router 100 by using a second SSID.

In operation 1106, the wireless router 100 and the IoT device 200 may be wirelessly connected to each other by using the second SSID included in the connection information. According to an embodiment, after the IoT device 200 is wirelessly connected to the wireless router 100 by using the second SSID, the setup device 400 may receive information about the fact that the IoT device 200 has been connected by using the second SSID. The setup device 400 may display the connection complete message 501, as illustrated in FIG. 5A, in response to the reception of the information. As illustrated in FIG. 5A, the setup device 400 may display the list 502 of the IoT devices 200, which are connected to the wireless router 100 by using the second SSID, together with the information of the wireless router 100.

It is understood that operation 1101 to operation 1106 correspond to operation 201 to operation 203 and operation 205 to operation 207, and embodiments described in details about operation 201 to operation 203 and operation 205 to operation 207 are applied to operation 1101 to operation 1106.

Hereinafter, in the case where the setup device 400 is directly connected to the wireless router 100, a process in which the IoT device 200 is connected to the wireless router 100 depending on the request of the setup device 400 will be described with reference to FIGS. 7A, 7B, 8, 9A, 9B, 10 and 12.

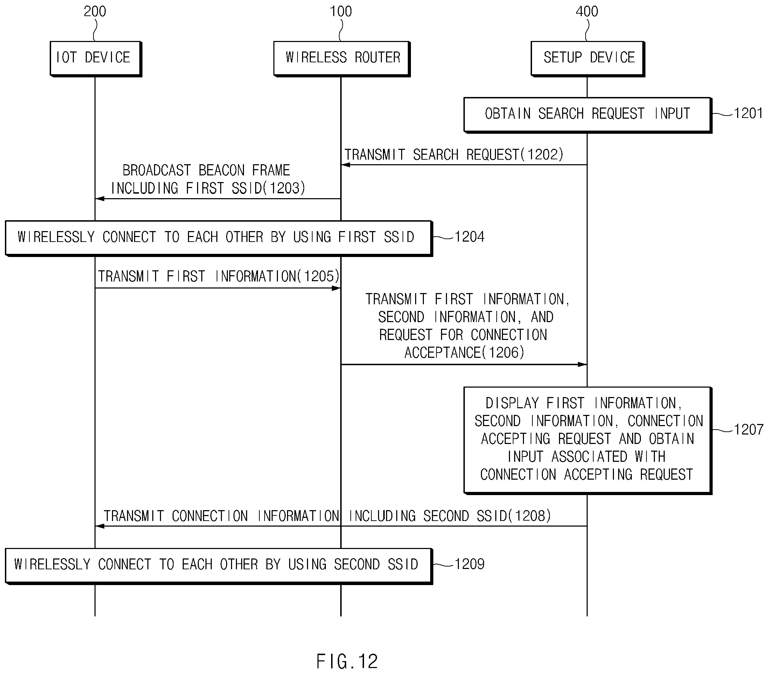

FIG. 12 is a flowchart illustrating a process in which the IoT device 200 is connected to the wireless router 100 depending on a request of the setup device 400 connected to the wireless router 100, according to an embodiment of the present disclosure.

In operation 1201, the setup device 400 may obtain a search request input for searching for the IoT device 200.

According to an embodiment, as illustrated in FIG. 7A, the setup device 400 may display information (e.g., a name (e.g., AP 'A' and AP 'B') and a location of the wireless router 100) of the plurality of wireless routers 100 registered in account information corresponding to the setup device 400, and the list 701a or 701b (e.g., the IoT devices 200 connected to AP 'A' are an air conditioner and a television; the IoT device 200 connected to AP 'B' is a refrigerator) of the IoT devices 200 respectively connected to the plurality of wireless routers 100. The setup device 400 may display the object 702a or 702b for obtaining a search request input and may obtain a search request input through the object. According to an embodiment, in the case where the setup device 400 is directly connected to AP 'A', the setup device 400 may display the list 701a of the IoT devices 200 and the object 702a, which are associated with AP 'A', and the list 701b of the IoT devices 200 and the object 702b, which are associated with AP 'B', so as to be distinguished from each other. For example, unlike the list 701a of the IoT devices 200 and the object 702a, which are associated with AP 'A', the setup device 400 may opaquely display the list 701b of the IoT devices 200 and the object 702b, which are associated with AP 'B'.

According to an embodiment, after obtaining the search request input through the object 702a for searching for the new IoT device 200 at a periphery of AP 'A', as illustrated in FIG. 7B, the setup device 400 may further display a UI including the query message 703 for determining whether a search request is present. The setup device 400 may obtain an input for determining the search request, through the UI.

In operation 1202, the setup device 400 may transmit the search request to the wireless router 100, in response to the obtaining of the search request input.

According to an embodiment, after the setup device 400 transmits the search request, until a connection accepting request is received, as illustrated in FIG. 8, the setup device 400 may display a screen indicating the search progress status 801.

In operation 1203, the wireless router 100 may broadcast a beacon frame including a first SSID for scanning the IoT device 200, in response to the reception of the search request. Operation 1203 may correspond to operation 201e of FIG. 2C.

In operation 1204, the wireless router 100 and the IoT device 200 may be wirelessly connected to each other by using the first SSID. In operation 1203, since the beacon frame including the first SSID is broadcast, operation 1204 may correspond to operation 201f and operation 201g of FIG. 2C.

In operation 1205, the IoT device 200 may transmit first information about the IoT device 200 to the wireless router 100.

In operation 1206, the wireless router 100 may transmit at least part of the first information, second information about the wireless router 100, and a request for connection acceptance between the IoT device 200 and the wireless router 100, to the setup device 400.

In operation 1207, the setup device 400 may display at least part of the first information, at least part of the second information, and the connection accepting request, in a display and may obtain an input associated with the connection accepting request.

According to an embodiment, as illustrated in FIG. 9A, the setup device 400 may display the UI 901 including at least part of the first information about the refrigerator (e.g., a type (refrigerator) of the IoT device 200, a serial number (RF95K9980S7) of the IoT device 200, or the like), information about AP 'A' (e.g., a name (AP 'A') of the wireless router 100), a message for querying whether to accept the connection, and an object for obtaining an input associated with a connection accepting request.

According to an embodiment, in operation 1204, in the case where the new IoT device 200 is not connected to the wireless router 100, the wireless router 100 may transmit a message saying that there is no new IoT device 200, to the setup device 400. The setup device 400 may display a message saying that the new IoT device 200 is not found, as illustrated in FIG. 9B, and the UI 902 for obtaining a re-search request input.

In operation 1208, the setup device 400 may transmit connection information including the second SSID for the wireless connection between the IoT device 200 and the wireless router 100, to the IoT device 200 based on the input associated with the connection accepting request. At this time, the wireless router 100 may forward the connection information transmitted by the setup device 400, to the IoT device 200.

In operation 1209, the wireless router 100 and the IoT device 200 may be wirelessly connected to each other by using the second SSID included in the connection information.

According to an embodiment, after the IoT device 200 (e.g., a refrigerator) and the wireless router 100 (e.g., AP 'A') are wirelessly connected to each other by using the second SSID, the setup device 400 may receive information about the fact that the IoT device 200 has been connected to the wireless router 100 by using the second SSID. As illustrated in FIG. 10, the setup device 400 may display a connection complete message 1001 and the list 1002 of the IoT devices 200 connected to the wireless router 100 (e.g., AP 'A').

Operation 1201 to operation 1204 may correspond to operation 601 to operation 604, and operation 1205 to operation 1209 may correspond to operation 1102 to operation 1106. It is understood that embodiments given in descriptions about operation 601 to operation 604 are applied to operation 1201 to operation 1204, and embodiments given in descriptions about operation 1102 to operation 1106 are also applied to operation 1205 to operation 1209.

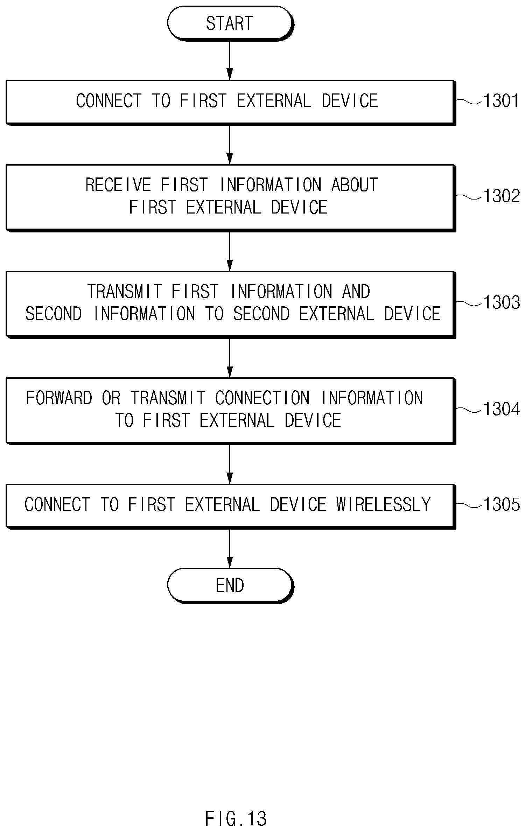

Hereinafter, the operation, for wirelessly connecting the IoT device 200 to the wireless router 100 by using the second SSID, of each of the wireless router 100, the IoT device 200, and the cloud system 300 will be described with reference to FIGS. 13 to 15. Below, the wireless router 100, the IoT device 200, the cloud system 300, and the setup device 400 may include all or part of the elements described with reference to FIGS. 1A and 1B.

FIG. 13 is a flowchart illustrating an operation of the wireless router 100 for connecting the IoT device 200 to the wireless router 100, according to an embodiment of the present disclosure.

Referring to FIG. 13, in operation 1301, the processor 130 of the wireless router 100 may connect to a first external device (e.g., the IoT device 200) wirelessly through the wireless communication circuit 110 by using a first SSID.

According to an embodiment, before being wirelessly connected to the first external device, the processor 130 of the wireless router 100 may receive a request for searching for the first external device, from a second external device (e.g., the cloud system 300 or the setup device 400) through at least one of the wireless communication circuit 110 or the communication interface 120 and may allow a beacon frame including the first SSID to be broadcast in response to the reception of the search request. That is, the processor 130 of the wireless router 100 may perform the above-described operation 603.

In operation 1302, the processor 130 of the wireless router 100 may receive first information about the first external device from the first external device by using the wireless communication circuit 110.

According to an embodiment, the processor 130 of the wireless router 100 may receive at least one of a probe request frame or an association request frame, which includes the first information, from the first external device by using the wireless communication circuit 110 for the purpose of connecting to the first external device in operation 1301. In the case where the processor 130 of the wireless router 100 receives at least one of the probe request frame or the association request frame, which includes the first information, from the first external device, operation 1302 may be skipped.

In operation 1303, the processor 130 of the wireless router 100 may transmit at least part of the first information and second information about the wireless router 100 to the second external device through at least one of the wireless communication circuit 110 or the communication interface 120.

According to an embodiment, the second information may include a second SSID.

According to an embodiment, the memory 140 of the wireless router 100 may store a wireless connection history between the wireless router 100 and an external device (e.g., the IoT device 200 or the like). Only in the case where it is determined based on the first information and the wireless connection history that there is no history in which the first external device is connected to the wireless router 100, the processor 130 of the wireless router 100 may transmit at least part of first information and the second information to the second external device. For example, the memory 140 of the wireless router 100 may store a history in which refrigerator A, air cleaner B, and air conditioner C have been connected to the wireless router 100. At this time, in the case where refrigerator A tries to connect to the wireless router 100 wirelessly, the processor 130 of the wireless router 100 may not transmit at least part of the first information and the second information to the second external device. In the case where washer D being a new IoT device tries to connect to the wireless router 100 wirelessly, the processor 130 of the wireless router 100 may transmit at least part of the first information of washer D and the second information to the second external device.

In operation 1304, the processor 130 of the wireless router 100 may forward, to the first external device, connection information from the second external device including the second SSID, through at least one of the wireless communication circuit 110 or the communication interface 120. Alternatively, the processor 130 of the wireless router 100 may receive a transmission request of the connection information from the second external device and may transmit the connection information to the first external device.

According to an embodiment, in the case where the wireless router 100 is connected to the cloud system 300 being the second external device through the communication interface 120, the processor 130 of the wireless router 100 may forward the connection information from the cloud system 300, to the first external device. In another embodiment, the processor 130 of the wireless router 100 may receive a transmission request of the connection information from a third external device (e.g., the setup device 400) and may transmit the connection information to the first external device by using the wireless communication circuit 110 in response to the transmission request.

According to an embodiment, in the case where the wireless router 100 is connected to the setup device 400 being the second external device through the wireless communication circuit 110, the processor 130 of the wireless router 100 may forward the connection information from the setup device 400, to the first external device. In another embodiment, the processor 130 of the wireless router 100 may receive a transmission request of the connection information from the setup device 400 and may transmit the connection information to the first external device by using the wireless communication circuit 110 in response to the transmission request.

According to an embodiment, when the processor 130 of the wireless router 100 transmits the connection information in response to the transmission request, the processor 130 of the wireless router 100 may use the received second information or the second SSID stored in the memory of the wireless router 100.

In operation 1305, the processor 130 of the wireless router 100 may wirelessly connect to the first external device by using the connection information including the second SSID.

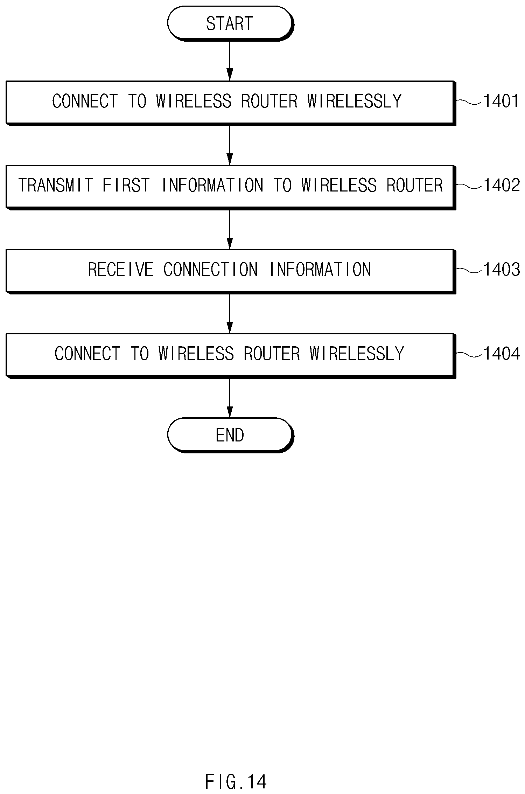

FIG. 14 is a flowchart illustrating an operation in which the IoT device 200 is connected to the wireless router 100, according to an embodiment of the present disclosure.

Referring to FIG. 14, in operation 1401, the processor 220 of the IoT device 200 may wirelessly connect to the wireless router 100 through the wireless communication circuit 210 by using a first SSID. According to an embodiment, the processor 220 of the IoT device 200 may receive a beacon frame including the first SSID from the wireless router 100 by using the wireless communication circuit 210, and may transmit an association request frame including first information about the IoT device 200, to the wireless router 100 in response to the reception of the beacon frame. That is, the processor 130 of the wireless router 100 may perform the above-described operation 201e and operation 201f.

In operation 1402, the processor 220 of the IoT device 200 may transmit the first information about an electronic device to the wireless router 100 by using the wireless communication circuit 210.

According to an embodiment, in operation 1401, the processor 220 of the IoT device 200 may transmit at least one of a probe request frame or the association request frame, which includes the first information, to the wireless router 100 by using the wireless communication circuit 210 for the purpose of connecting to the wireless router 100. In the case where the processor 220 of the IoT device 200 transmits at least one of the probe request frame or the association request frame, which includes the first information, operation 1402 may be skipped.

In operation 1403, the processor 220 of the IoT device 200 may receive the connection information including the second SSID, by using the wireless communication circuit 210.

In operation 1404, the processor 220 of the IoT device 200 may wirelessly connect to the wireless router 100 through the wireless communication circuit 210 by using the connection information.

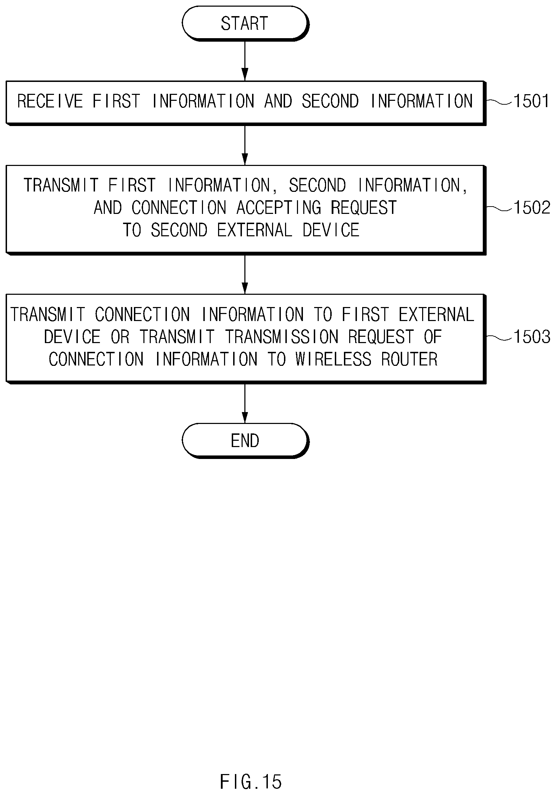

FIG. 15 is a flowchart illustrating an operation of the cloud system 300 for connecting the IoT device 200 to the wireless router 100, according to an embodiment of the present disclosure.

Referring to FIG. 15, in operation 1501, the processor 320 of the cloud system 300 may receive at least part of first information about a first external device (e.g., the IoT device 200) and second information about the wireless router 100, from the wireless router 100 through the communication interface 310.

According to an embodiment, before receiving the first information and the second information, the processor 320 of the cloud system 300 may forward a request from a second external device for searching for a first external device, to the wireless router 100 through the communication interface 310. After the first external device is connected to the wireless router 100 depending on the request, the processor 320 of the cloud system 300 may receive the first information and the second information.

In operation 1502, the processor 320 of the cloud system 300 may transmit the first information, the second information, and a connection accepting request, to the second external device (e.g., the setup device 400) determined based on the second information.

According to an embodiment, the second information may include account information of the wireless router 100, and the processor 320 of the cloud system 300 may transmit the first information, the second information, and the connection accepting request, to one or more second external devices corresponding to the account information through the communication interface 310.

According to an embodiment, the processor 320 of the cloud system 300 may transmit a query for checking whether the second external device is being used, to the one or more second external devices corresponding to the second information through the communication interface 310. The processor 320 of the cloud system 300 may receive a response to the query, through the communication interface 310. On the basis of the response to the query, the processor 320 of the cloud system 300 may transmit at least part of the first information, at least part of the second information, and the connection accepting request for the wireless connection between the first external device and the wireless router 100, to a second external device, which is determined as being used, from among the one or more second external devices through the communication interface 310.

In operation 1503, the processor 320 of the cloud system 300 may forward connection information from the second external device, which is based on the first information and which includes a second SSID, to the first external device, or may forward a transmission request of the connection information to the wireless router 100.

According to an embodiment, the second external device may transmit the connection information or the transmission request of the connection information to the wireless router 100, and the cloud system 300 may be a medium connecting the second external device and the wireless router 100. The cloud system 300 may forward at least one of the connection information or the transmission request of the connection information, which the second external device transmits, to the wireless router 100 through the communication interface 310.

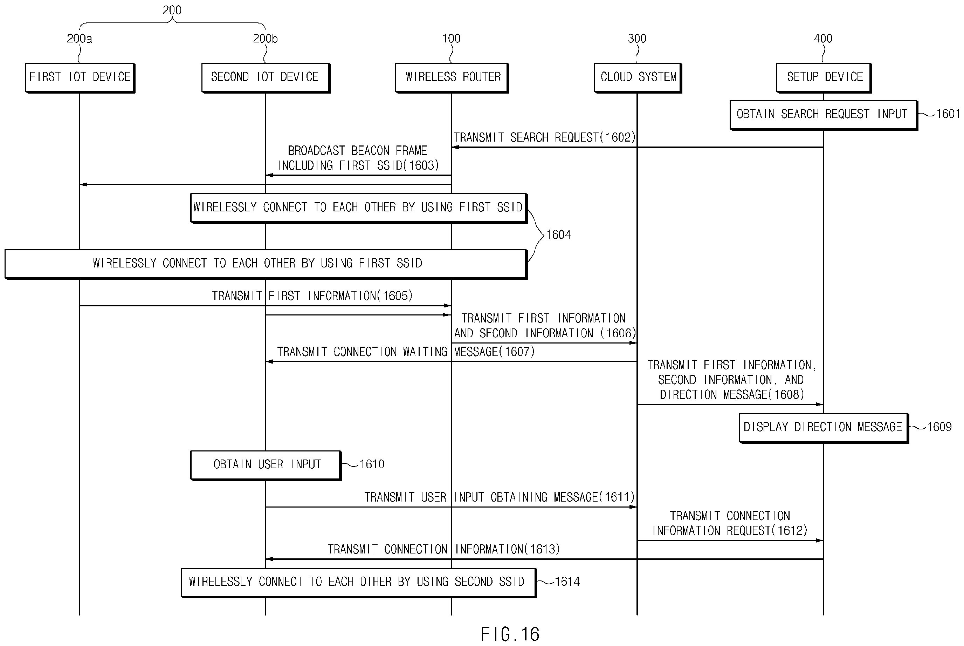

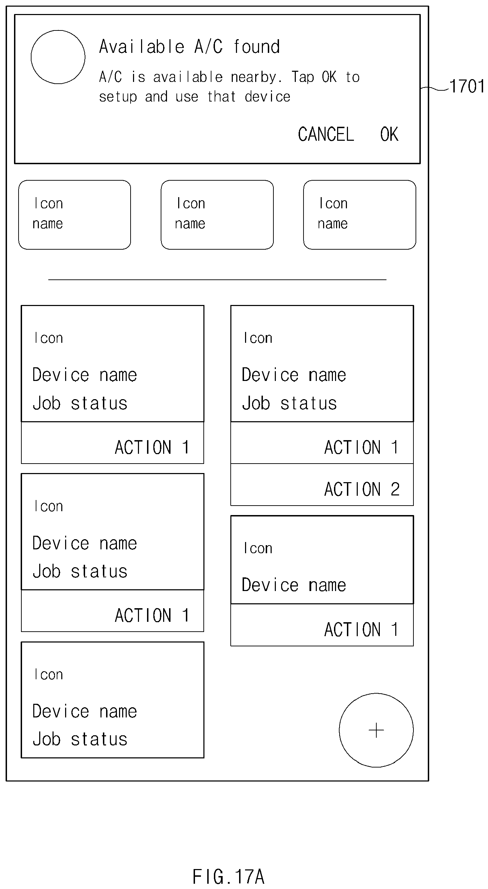

According to various embodiments, only the IoT device 200, which satisfies a preset condition, from among the plurality of IoT devices 200 at a periphery of the wireless router 100 may be connected to the wireless router 100 by using the second SSID. Hereinafter, an embodiment in which only the IoT device 200, which satisfies the preset condition, from among the plurality of IoT devices 200 at a periphery of the wireless router 100 is connected to the wireless router 100 by using the second SSID will be described with reference to FIGS. 16, and 17A to 17E.

Below, the wireless router 100, the cloud system 300, and the setup device 400 may include all or part of elements of the wireless router 100, the cloud system 300, and the setup device 400 illustrated in FIG. 1A. A first IoT device 200a and a second IoT device 200b may include all or part of the elements of the IoT device 200 illustrated in FIG. 1A.

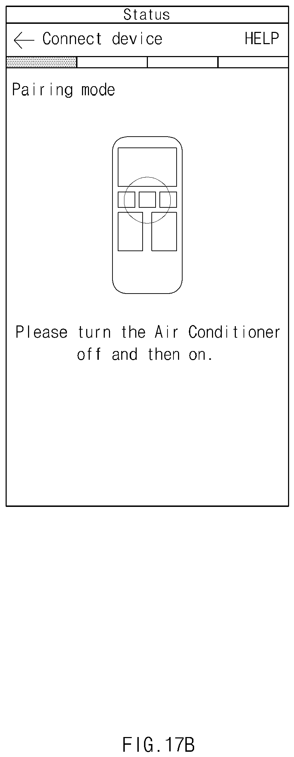

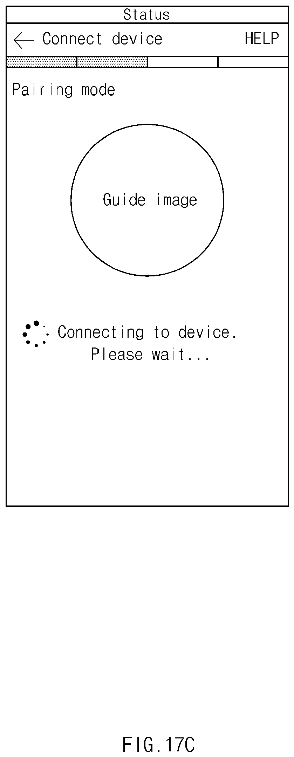

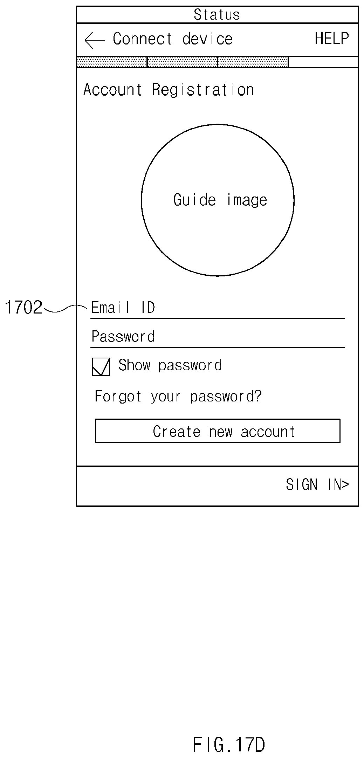

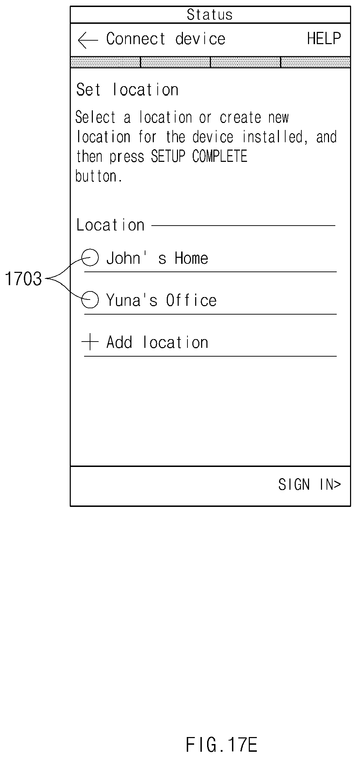

FIG. 16 is a flowchart illustrating a process in which the IoT device 200, which satisfies a condition, from among the plurality of IoT devices 200 is connected to the wireless router 100, according to an embodiment of the present disclosure. FIG. 17A illustrates a screen displaying a UI for querying whether the setup device 400 is going to proceed with connection setup, according to an embodiment of the present disclosure. FIG. 17B illustrates a screen in which the setup device 400 displays a direction message, according to an embodiment of the present disclosure. FIG. 17C illustrates a screen displaying a message for providing notification that connection setup is in progress, according to an embodiment of the present disclosure. FIG. 17D illustrates a screen in which the setup device 400 obtains an account information input, according to an embodiment of the present disclosure. FIG. 17E illustrates a screen in which the setup device 400 obtains a location setup input of the IoT device 200, according to an embodiment of the present disclosure.

Referring to FIG. 16, in operation 1601, the setup device 400 may obtain a search request input for searching for the IoT device 200.

In operation 1602, the setup device 400 may transmit a search request to the wireless router 100, in response to the obtaining of the search request input. At this time, the cloud system 300 may forward the search request, which the setup device 400 transmits, to the wireless router 100.

According to an embodiment, if a preset time elapses after an application connecting to the IoT device 200 has been executed or is executed without receiving the search request input of operation 1601, the setup device 400 may transmit the search request to the wireless router 100. In another embodiment, the setup device 400 may periodically transmit the search request to the wireless router 100.

In operation 1603, the wireless router 100 may broadcast a beacon frame including a first SSID for scanning the IoT device 200, in response to the reception of the search request. The first IoT device 200a and the second IoT device 200b may receive the beacon frame that the wireless router 100 broadcasts.

In operation 1604, the wireless router 100 and the first IoT device 200a may be wirelessly connected to each other by using the first SSID, and the wireless router 100 and the second IoT device 200b may be wirelessly connected to each other by using the first SSID.

According to an embodiment, even though not receiving the beacon frame, the first IoT device 200a and the second IoT device 200b may transmit a probe request frame including the first SSID to the wireless router 100, and thus may connect to the wireless router 100 by using the first SSID.

In operation 1605, the first IoT device 200a and the second IoT device 200b may transmit first information about each of the first IoT device 200a and the second IoT device 200b to the wireless router 100.

In operation 1606, the wireless router 100 may transmit at least part of the received first information and second information about the wireless router 100 to the cloud system 300.

In operation 1607, the cloud system 300 may transmit a connection waiting message to the IoT device 200 satisfying a preset condition. In the embodiment of FIG. 16, the IoT device 200 satisfying the preset condition may be the second IoT device 200b, and the cloud system 300 may transmit the connection waiting message to only the second IoT device 200b.

According to an embodiment, whether the preset condition is satisfied may be determined based on first information of the IoT device 200 (e.g., a serial number, MAC address, authentication information, or the like).

According to an embodiment, the preset condition is that the IoT device 200 is connected to the wireless router 100 first, that the IoT device 200 is connected again within a specified period after being connected to the wireless router 100 first, or that the IoT device 200 is reset.

According to various embodiments, whether the preset condition is satisfied may be performed by at least one of the wireless router 100, the cloud system 300, or the setup device 400.

According to an embodiment, the connection waiting message may include information about an operation that the second IoT device 200b needs to perform for the purpose of receiving the connection information. For example, the operation that the second IoT device 200b needs to perform for the purpose of receiving the connection information may be an operation in which the second IoT device 200b is turned off and then is turned on again, an operation of transmitting a signal that the second IoT device 200b is capable of providing, or the like.

According to various embodiments, the signal that the second IoT device 200b is capable of providing may be sound waves, light waves, electromagnetic waves, or the like. For example, in the case where the second IoT device 200b is an air conditioner including a speaker and a light emitting diode (LED), the air conditioner may output a preset sound through a speaker or may output light of a preset color by using the LED.

According to an embodiment, the cloud system 300 may transmit the connection waiting message corresponding to an interface that the second IoT device 200b supports, based on the first information. For example, in the case where an interface that the air conditioner supports is a sound interface, the cloud system 300 may transmit the connection waiting message saying that "output a preset sound".

In operation 1608, the cloud system 300 may transmit at least part of the first information, at least part of the second information, and a direction message based on the second information. For example, the second information may be account information in which the wireless router 100 is registered. According to an embodiment, the direction message may include information, which is included in the connection waiting message, about an operation that the second IoT device 200b needs to perform for the purpose of receiving the connection information. For example, in the case where the operation that the second IoT device 200b needs to perform for the purpose of receiving the connection information is an operation in which the second IoT device 200b is turned off and then is turned on, the direction message may be "turn an IoT device off and then on".

According to various embodiments, in the case where the operation that the second IoT device 200b needs to perform for the purpose of receiving the connection information is that the second IoT device 200b outputs a signal such as a sound wave, a light wave, or the like, the direction message may be a message saying that "if receiving the signal, transmit the connection information to the second IoT device 200b". For example, in the case where the operation that the air conditioner needs to perform for the purpose of receiving the connection information is an operation of outputting a specific sound, the setup device 400 may receive the specific sound through a microphone and may transmit the connection information to the air conditioner.

In operation 1609, the setup device 400 may display the direction message. According to an embodiment, the setup device 400 may further display a user interface (UI) for querying whether to proceed with the connection setup of the second IoT device 200b. For example, as illustrated in FIG. 17A, the setup device 400 may display a message saying that the air conditioner has been found and a UI 1701 for querying whether to proceed with the connection setup.

According to an embodiment, if the setup device 400 obtains a user input for selecting 'OK', as illustrated in FIG. 17B, the setup device 400 may display the direction message saying that "please turn the air conditioner off and then on".

In operation 1610, the second IoT device 200b receiving the connection waiting message may perform an operation based on the connection waiting message. According to an embodiment, the operation based on the connection waiting message may be an operation of obtaining a user input.

In operation 1611, the second IoT device 200b receiving the connection waiting message may transmit a message saying that the operation based on the connection waiting message has been performed, to the cloud system 300. According to an embodiment, in the case where the operation based on the connection waiting message is the operation of obtaining a user input and the second IoT device 200b obtains the user input, the second IoT device 200b may transmit a user input obtaining message to the cloud system 300.

In operation 1612, the cloud system 300 may transmit the connection information request to the setup device 400. According to an embodiment, after receiving the connection information request, as illustrated in FIG. 17C, the setup device 400 may display a message for providing notification that connection setup is in progress.

In operation 1613, the setup device 400 may transmit connection information including a second SSID for the wireless connection between the second IoT device 200b and the wireless router 100, to the second IoT device 200b based on the input associated with the connection accepting request. According to an embodiment, the connection information including the second SSID for the wireless connection to the wireless router 100 may be transmitted to the second IoT device 200b through the cloud system 300 and the wireless router 100.

In operation 1614, the wireless router 100 and the second IoT device 200b may be wirelessly connected to each other by using the second SSID included in the connection information.

According to various embodiments, as illustrated in FIG. 17D, the setup device 400 may display a UI 1702 for registering an account corresponding to the second IoT device 200b that is connected to the wireless router 100 by using the second SSID.

According to various embodiments, as illustrated in FIG. 17E, the setup device 400 may display a UI 1703 for registering a place at which the second IoT device 200b connected to the wireless router 100 by using the second SSID is installed.

According to an embodiment of the present disclosure, an electronic device may include a housing, a wireless communication circuit disposed inside the housing and supporting a wireless communication protocol having coverage within 100 meters, a communication interface disposed inside the housing, a processor disposed inside the housing and operatively connected to the wireless communication circuit and the communication interface, and a memory disposed inside the housing and electrically connected or coupled to the processor. The memory may store instructions, when executed, causing the processor to connect a first external device wirelessly through the wireless communication circuit by using a first SSID, to receive first information about the first external device from the first external device by using the wireless communication circuit, to transmit at least part of the first information and second information about the electronic device, to a second external device through at least one of the wireless communication circuit or the communication interface, to forward connection information from the second external device, which is based on the first information and the second information and which includes a second SSID for a wireless connection between the first external device and the electronic device, to the first external device through at least one of the wireless communication circuit or the communication interface, or to receive a transmission request of the connection information from the second external device through at least one of the wireless communication circuit or the communication interface and transmit the connection information to the first external device by using the wireless communication circuit in response to the transmission request, and to connect to the first external device wirelessly through the wireless communication circuit by using the connection information.

According to an embodiment, the instructions, when executed, may cause the processor to receive at least one of a probe request frame or an association request frame, which includes the first information, from the first external device by using the wireless communication circuit.

According to an embodiment, the first information may be included in a VSIE area of at least one of the probe request frame or the connection request frame.

According to an embodiment, the second information may include the second SSID.

According to an embodiment, the instructions, when executed, may cause the processor to periodically broadcast a beacon frame including the first SSID.

According to an embodiment, the instructions, when executed, may cause the processor to receive a request for searching for the first external device from the second external device through at least one of the wireless communication circuit or the communication interface and to broadcast a beacon frame including the first SSID in response to the reception of the request.

According to an embodiment, the memory may store a wireless connection history between the electronic device and the first external device. The instructions, when executed, may cause the processor, if it is determined based on the first information and the wireless connection history that there is no history in which the first external device is connected to the electronic device, to transmit at least part of the first information and the second information to the second external device.

According to an embodiment, the wireless communication protocol may include at least one of a BT scheme, a Zigbee communication scheme, a wireless HART communication scheme, a near field communication scheme, a Wi-Fi scheme, a Wi-Fi direct scheme, a GSM communication scheme, a HSDPA communication scheme, a LTE communication scheme, a LTE-A communication scheme, a CDMA communication scheme, a CDMA2000 communication scheme, or a WIBRO communication scheme.

According to an embodiment, the first information may include at least one of manufacturer information of the first external device, a model name of the first external device, a device name of the first external device, a version name of the first external device, a product group of the first external device, a serial number of the first external device, authentication information for network connection, MAC address, or IP address.

According to an embodiment, the connection information may include at least one of a password corresponding to the second SSID, security information, or credential information for passpoint connection.

According to an embodiment, the second external device may include a setup device, the instructions, when executed, may cause the processor, if the electronic device is wirelessly connected to the setup device by using a the wireless communication circuit, to transmit at least part of the first information and the second information to the setup device by using the wireless communication circuit and to transmit the connection information from the setup device, to the first external device through the wireless communication circuit or receive the transmission request of the connection information from the setup device through the wireless communication circuit to transmit the connection information stored in the memory to the first external device in response to the transmission request.

According to an embodiment, the memory may stores instructions, when executed, causing the processor to broadcast a signal including a first SSID by using the wireless communication circuit, to wirelessly connect to a first external device by using the wireless communication circuit, to receive first information about the first external device from the first external device by using the wireless communication circuit, to transmit at least part of the first information and second information about the electronic device through the communication interface, to receive authentication information about wireless connection to the first external device, through the communication interface, to transmit information including a second SSID to the first external device by using the wireless communication circuit in response to the reception of the authentication information, and to connect to the first external device through the wireless communication circuit by using the second SSID.

According to an embodiment, the instructions, when executed, may cause the processor to determine whether to transmit at least part of the first information, based on the first information.

According to an embodiment, the instructions, when executed, may cause the processor to determine a connection permission of the first external device based on the credential information.

According to an embodiment, if a setup device is connected to the electronic device by using the wireless communication circuit, the instructions, when executed, may cause the processor to transmit at least part of the first information to the portable terminal by using the wireless communication circuit and to receive the authentication information from the portable terminal by using the wireless communication circuit.

According to an embodiment of the present disclosure, an electronic device may include a housing, a wireless communication circuit disposed inside the housing and supporting a wireless communication protocol having coverage within 100 meters, a processor disposed inside the housing and operatively connected to the wireless communication circuit, and a memory disposed inside the housing and electrically connected to the processor. The memory may store instructions that, when executed, cause the processor to connect to a wireless router wirelessly through the wireless communication circuit by using a first SSID, to transmit first information about the electronic device to the wireless router by using the wireless communication circuit, to receive connection information including a second SSID for a wireless connection between the electronic device and the wireless router from the wireless router by using the wireless communication circuit, and to connect to the wireless router wirelessly through the wireless communication circuit by using the connection information.

According to an embodiment, the first information may include at least one of manufacturer information of the electronic device, a model name of the electronic device, a device name of the electronic device, a version name of the electronic device, a product group of the electronic device, a serial number of the electronic device, authentication information for network connection, MAC address, or IP address.

According to an embodiment, the instructions, when executed, may cause the processor to transmit at least one of a probe request frame or an association request frame, which includes the first information, to the wireless router by using the wireless communication circuit.

According to an embodiment, the instructions, when executed, may cause the processor to receive a beacon frame including the first SSID from the wireless router by using the wireless communication circuit and to transmit an association request frame including the first information to the wireless router in response to the reception of the beacon frame.

According to an embodiment, the connection information may include at least one of a password corresponding to the second SSID, security information, or credential information for passpoint connection.

According to an embodiment, the instructions, when executed, may cause the processor to connect to the wireless router by further using at least one of a password corresponding to the second SSID, security information, or credential information for passpoint connection.

According to an embodiment, the memory may stores instructions, when executed, causing the processor to receive the broadcast signal including a first SSID from a wireless router by using the wireless communication circuit, to wirelessly connect to the wireless router by using the wireless communication circuit, to transmit first information about the electronic device to the wireless router by using the wireless communication circuit, to receive information including a second SSID associated with the wireless router from the wireless router by using the wireless communication circuit, and to connect to the wireless router through the wireless communication circuit by using the second SSID.

According to an embodiment of the present disclosure, a system may include a housing, a communication interface disposed inside the housing, a processor disposed inside the housing and operatively connected to the communication interface, and a memory disposed inside the housing and electrically connected to the processor. The memory may store instructions that, when executed, cause the processor to receive first information about a first external device and second information about a wireless router from the wireless router through the communication interface, to transmit at least part of the first information, at least part of the second information, and a connection accepting request for a wireless connection between the first external device and the wireless router to one or more second external devices determined based on the second information, through the communication interface, and to transmit connection information, which is based on the first information from at least one second external device of the one or more second external devices and which includes a SSID, to the first external device through the communication interface, or transmit a transmission request of the connection information to the wireless router.

According to an embodiment, the second information may include account information of the wireless router. The instructions, when executed, may cause the processor to transmit the at least part of the first information, the at least part of the second information, and the connection accepting request to the one or more second external devices corresponding to the account information.

According to an embodiment, the second information may include the SSID.

According to an embodiment, the instructions, when executed, may cause the processor to transmit a request, which is received from the at least one second external device of the one or more second external devices, for searching for the first external device to the wireless router through the communication interface.

According to an embodiment, the instructions, when executed, cause the processor to transmit a query for checking whether the second external device is being used, to the one or more second external devices corresponding to the second information through the communication interface, to receive a response to the query through the communication interface, and to transmit the at least part of the first information, the at least part of the second information, and the connection accepting request for the wireless connection between the first external device and the wireless router, to the second external device, which is determined as being used, from among the one or more second external devices through the communication interface based on the response to the query.

According to an embodiment, the memory may stores instructions, when executed, causing the processor to receive first information about a first electronic device, second information about the wireless router, and account information from a wireless router through a communication interface, to transmit an authentication request for a connection between the wireless router and the first electronic device to a second electronic device through the communication interface based at least partly on the second information and the account information, to receive authentication from the second electronic device through the communication interface, and to transmit authentication information about a wireless connection to the first electronic device to the wireless router through the communication interface.

According to an embodiment, the instructions, when executed, may cause the processor to determine the second electronic device that is going to transmit the authentication request, based on the second information.

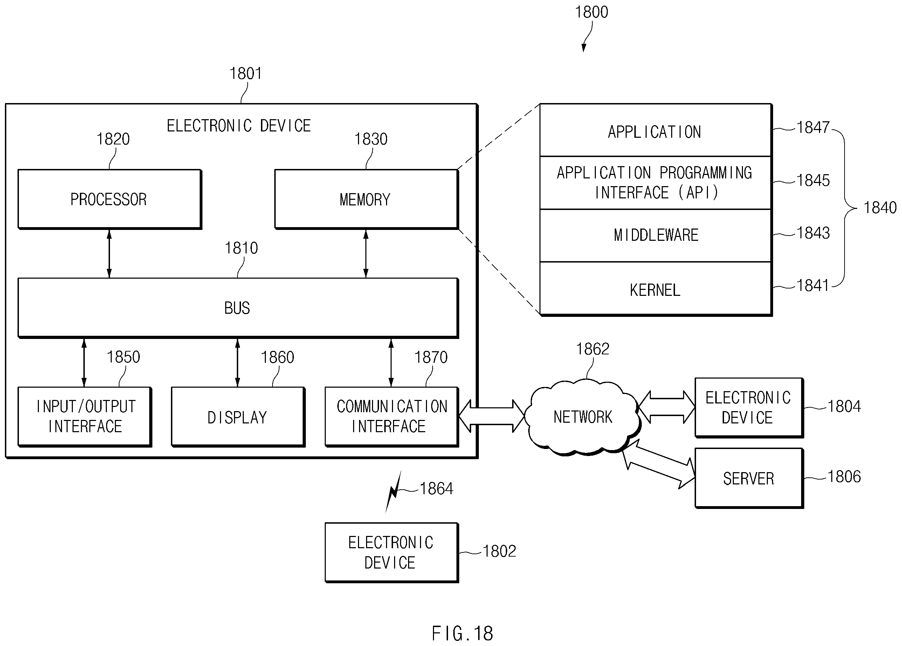

FIG. 18 illustrates an electronic device in a network environment system 1800, according to an embodiment of the present disclosure.

Referring to FIG. 18, according to various embodiments, an electronic device 1801 (e.g., the wireless router 100), a first electronic device 1802 (e.g., the IoT device 200), a second electronic device 1804 (e.g., the setup device 400), or a server 1806 (e.g., the cloud system 300) may be connected to each other through a network 1862 or short range communication 1864. The electronic device 1801 may include a bus 1810, a processor 1820 (e.g., at least one processor), a memory 1830 (e.g., a storage), an input/output interface 1850, a display 1860, and a communication interface 1870. According to an embodiment, the electronic device 1801 may not include at least one of the above-described elements or may further include other element(s).

For example, the bus 1810 may interconnect the above-described elements 1820 to 1870 and may include a circuit for conveying communications (e.g., a control message and/or data) among the above-described elements.

The processor 1820 (e.g., the processor 130 of FIG. 1A, the processor 220 of FIG. 1A, the processor 320 of FIG. 1A, the processor 420 of FIG. 1A, the processor 130a of FIG. 1B, the processor 130b of FIG. 1B, the processor 220 of FIG. 1B, the processor 320 of FIG. 1B, or the processor 420 of FIG. 1B) may include one or more of a CPU, an AP, or a communication processor (CP). For example, the processor 1820 may perform an arithmetic operation or data processing associated with control and/or communication of at least other elements of the electronic device 1801.

The memory 1830 (e.g., the memory 140 of FIG. 1A, the memory 230 of FIG. 1A, the memory 330 of FIG. 1A, the memory 430 of FIG. 1A, the memory 140a of FIG. 1B, the memory 140b of FIG. 1B, the memory 230 of FIG. 1B, the memory 330 of FIG. 1B, or the memory 430 of FIG. 1B) may include a volatile and/or nonvolatile memory. For example, the memory 1830 may store instructions or data associated with at least one other element(s) of the electronic device 1801. According to an embodiment, the memory 1830 may store software and/or a program 1840. The program 1840 may include, for example, a kernel 1841, a middleware 1843, an application programming interface (API) 1845, and/or an application program (or "an application") 1847. At least a part of the kernel 1841, the middleware 1843, or the API 1845 may be referred to as an "operating system (OS)".

For example, the kernel 1841 may control or manage system resources (e.g., the bus 1810, the processor 1820, the memory 1830, and the like) that are used to execute operations or functions of other programs (e.g., the middleware 1843, the API 1845, and the application program 1847). Furthermore, the kernel 1841 may provide an interface that allows the middleware 1843, the API 1845, or the application program 1847 to access discrete elements of the electronic device 1801 so as to control or manage system resources.

The middleware 1843 may perform, for example, a mediation role such that the API 1845 or the application program 1847 communicates with the kernel 1841 to exchange data.

Furthermore, the middleware 1843 may process task requests received from the application program 1847 according to a priority. For example, the middleware 1843 may assign the priority, which makes it possible to use a system resource (e.g., the bus 1810, the processor 1820, the memory 1830, or the like) of the electronic device 1801, to at least one of the application program 1847. For example, the middleware 1843 may process the one or more task requests according to the priority assigned to the at least one, which makes it possible to perform scheduling or load balancing on the one or more task requests.

The API 1845 may be, for example, an interface through which the application program 1847 controls a function provided by the kernel 1841 or the middleware 1843, and may include, for example, at least one interface or function (e.g., an instruction) for a file control, a window control, image processing, a character control, or the like.

The input/output interface 1850 may play a role, for example, of an interface which transmits an instruction or data input from a user or another external device, to other element(s) of the electronic device 1801. Furthermore, the input/output interface 1850 may output an instruction or data, received from other element(s) of the electronic device 1801, to a user or another external device.

The display 1860 (e.g., the display 440 of FIG. 1A or the display 440 of FIG. 1B) may include, for example, a liquid crystal display (LCD), an LED display, an organic LED (OLED) display, a microelectromechanical systems (MEMS) display, or an electronic paper display. The display 1860 may display, for example, various contents (e.g., a text, an image, a video, an icon, a symbol, and the like) to a user. The display 1860 may include a touch screen and may receive, for example, a touch, gesture, proximity, or hovering input using an electronic pen or a part of a user's body.

For example, the communication interface 1870 (e.g., the communication interface 120 of FIG. 1A, the communication interface 310 of FIG. 1A, the communication interface 410 of FIG. 1A, the communication interface 120a of FIG. 1B, the communication interface 120b of FIG. 1B, the communication interface 310 of FIG. 1B, or the communication interface 410 of FIG. 1B) may establish communication between the electronic device 1801 and an external device (e.g., the first electronic device 1802, the second electronic device 1804, or the server 1806). For example, the communication interface 1870 may be connected to the network 1862 over wireless communication or wired communication to communicate with the external device (e.g., the second electronic device 1804 or the server 1806).

The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the short range communication 1864. The short-range communication 1864 may include at least one of Wi-Fi, Bluetooth (BT), near field communication (NFC), magnetic stripe transmission (MST), a global navigation satellite system (GNSS), or the like.

The MST may generate a pulse in response to transmission data using an electromagnetic signal, and the pulse may generate a magnetic field signal. The electronic device 1801 may transfer the magnetic field signal to point of sale (POS), and the POS may detect the magnetic field signal using a MST reader. The POS may recover the data by converting the detected magnetic field signal to an electrical signal.

The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in this disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 1862 may include at least one of telecommunications networks, for example, a computer network (e.g., land area network (LAN) or wide area network (WAN)), an Internet, or a telephone network.

Each of the first and second electronic devices 1802 and 1804 may be a device of which the type is different from or the same as that of the electronic device 1801. According to an embodiment, the server 1806 may include a group of one or more servers. According to various embodiments, all or a portion of operations that the electronic device 1801 will perform may be executed by another or plural electronic devices (e.g., the first electronic device 1802, the second electronic device 1804 or the server 1806). According to an embodiment, in the case where the electronic device 1801 executes any function or service automatically or in response to a request, the electronic device 1801 may not perform the function or the service internally, but, alternatively additionally, it may request at least a portion of a function associated with the electronic device 1801 from another device (e.g., the electronic device 1802 or 1804 or the server 1806). The other electronic device may execute the requested function or additional function and may transmit the execution result to the electronic device 1801. The electronic device 1801 may provide the requested function or service using the received result or may additionally process the received result to provide the requested function or service. To this end, for example, cloud computing, distributed computing, or client-server computing may be used.

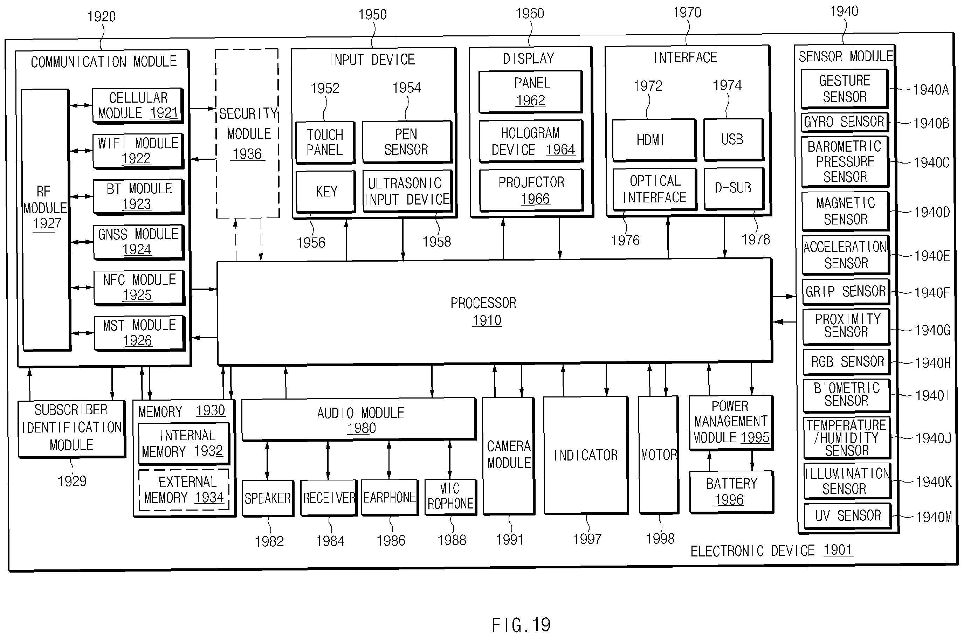

FIG. 19 illustrates a block diagram of an electronic device, according to an embodiment of the present disclosure.

Referring to FIG. 19, an electronic device 1901 may include, for example, all or a part of the electronic device 1801 illustrated in FIG. 18. According to an embodiment, the wireless router 100, the IoT device 200, the cloud system 300, and the setup device 400, which are illustrated in FIG. 1A may have a configuration that is the same as the electronic device 1901 in whole or in part. The electronic device 1901 may include one or more processors (e.g., an AP) 1910, a communication module 1920, a subscriber identification module 1929, a memory 1930, a sensor module 1940, an input device 1950, a display 1960, an interface 1970, an audio module 1980, a camera module 1991, a power management module 1995, a battery 1996, an indicator 1997, and a motor 1998.

The processor 1910 (e.g., the processor 130 of FIG. 1A, the processor 220 of FIG. 1A, the processor 320 of FIG. 1A, the processor 420 of FIG. 1A, the processor 130a of FIG. 1B, the processor 130b of FIG. 1B, the processor 220 of FIG. 1B, the processor 320 of FIG. 1B, or the processor 420 of FIG. 1B) may drive, for example, an OS or an application to control a plurality of hardware or software elements connected to the processor 1910 and may process and compute a variety of data. For example, the processor 1910 may be implemented with a system on chip (SoC). According to an embodiment, the processor 1910 may further include a graphics processing unit (GPU) and/or an image signal processor. The processor 1910 may include at least a part (e.g., a cellular module 1921) of elements illustrated in FIG. 19. The processor 1910 may load an instruction or data, which is received from at least one of other elements (e.g., a nonvolatile memory), into a volatile memory and process the loaded instruction or data. The processor 1910 may store a variety of data in the nonvolatile memory.

The communication module 1920 (e.g., the wireless communication circuit 110 of FIG. 1A, the communication interface 120 of FIG. 1A, the wireless communication circuit 210 of FIG. 1A, the communication interface 310 of FIG. 1A, the wireless communication circuit 110a of FIG. 1B, the communication interface 120a of FIG. 1B, the wireless communication circuit 210 of FIG. 1B, or the communication interface 310 of FIG. 1B) may be configured the same as or similar to the communication interface 1870 of FIG. 18. The communication module 1920 may include the cellular module 1921, a Wi-Fi module 1922, a Bluetooth (BT) module 1923, a GNSS module 1924 (e.g., a GPS module, a Glonass module, a Beidou module, or a Galileo module), a near field communication (NFC) module 1925, a MST module 1926 and a radio frequency (RF) module 1927.

The cellular module 1921 may provide, for example, voice communication, video communication, a character service, an Internet service, or the like over a communication network. According to an embodiment, the cellular module 1921 may perform discrimination and authentication of the electronic device 1901 within a communication network by using the subscriber identification module (e.g., a SIM card) 1929. According to an embodiment, the cellular module 1921 may perform at least a portion of functions that the processor 1910 provides. According to an embodiment, the cellular module 1921 may include a communication processor (CP).

Each of the Wi-Fi module 1922, the BT module 1923, the GNSS module 1924, the NFC module 1925, or the MST module 1926 may include a processor for processing data exchanged through a corresponding module, for example. According to an embodiment, at least a part (e.g., two or more) of the cellular module 1921, the Wi-Fi module 1922, the BT module 1923, the GNSS module 1924, the NFC module 1925, or the MST module 1926 may be included within one integrated circuit (IC) or an IC package.

For example, the RF module 1927 may transmit and receive a communication signal (e.g., an RF signal). For example, the RF module 1927 may include a transceiver, a power amplifier module (PAM), a frequency filter, a low noise amplifier (LNA), an antenna, or the like. According to another embodiment, at least one of the cellular module 1921, the Wi-Fi module 1922, the BT module 1923, the GNSS module 1924, the NFC module 1925, or the MST module 1926 may transmit and receive an RF signal through a separate RF module.

The subscriber identification module 1929 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 1930 (e.g., the memory 140 of FIG. 1A, the memory 230 of FIG. 1A, the memory 330 of FIG. 1A, the memory 430 of FIG. 1A, the memory 140a of FIG. 1B, the memory 140b of FIG. 1B, the memory 230 of FIG. 1B, the memory 330 of FIG. 1B, the memory 430 of FIG. 1B, or the memory 1830 of FIG. 18) may include an internal memory 1932 or an external memory 1934. For example, the internal memory 1932 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 1934 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 1934 may be operatively and/or physically connected to the electronic device 1901 through various interfaces.

A security module 1936 may be a module that includes a storage space of which a security level is higher than that of the memory 1930 and may be a circuit that guarantees safe data storage and a protected execution environment. The security module 1936 may be implemented with a separate circuit and may include a separate processor. For example, the security module 1936 may be in a smart chip or a secure digital (SD) card, which is removable, or may include an embedded secure element (eSE) embedded in a fixed chip of the electronic device 1901. Furthermore, the security module 1936 may operate based on an operating system (OS) that is different from the OS of the electronic device 1901. For example, the security module 1936 may operate based on java card open platform (JCOP) OS.

The sensor module 1940 may measure, for example, a physical quantity or may detect an operation state of the electronic device 1901. The sensor module 1940 may convert the measured or detected information to an electric signal. For example, the sensor module 1940 may include at least one of a gesture sensor 1940A, a gyro sensor 1940B, a barometric pressure sensor 1940C, a magnetic sensor 1940D, an acceleration sensor 1940E, a grip sensor 1940F, the proximity sensor 1940G, a color sensor 1940H (e.g., red, green, blue (RGB) sensor), a biometric sensor 19401, a temperature/humidity sensor 1940J, an illuminance sensor 1940K, or an ultraviolet (UV) sensor 1940M. Although not illustrated, additionally or generally, the sensor module 1940 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 1940 may further include a control circuit for controlling at least one or more sensors included therein. According to an embodiment, the electronic device 1901 may further include a processor that is a part of the processor 1910 or independent of the processor 1910 and is configured to control the sensor module 1940. The processor may control the sensor module 1940 while the processor 1910 remains at a sleep state.

The input device 1950 may include, for example, a touch panel 1952, a (digital) pen sensor 1954, a key 1956, or an ultrasonic input unit 1958. For example, the touch panel 1952 may use at least one of capacitive, resistive, infrared and ultrasonic detecting methods. Also, the touch panel 1952 may further include a control circuit. The touch panel 1952 may further include a tactile layer to provide a tactile reaction to a user.

The (digital) pen sensor 1954 may be, for example, a part of a touch panel or may include an additional sheet for recognition. The key 1956 may include, for example, a physical button, an optical key, a keypad, or the like. The ultrasonic input device 1958 may detect (or sense) an ultrasonic signal, which is generated from an input device, through a microphone (e.g., a microphone 1988) and may check data corresponding to the detected ultrasonic signal.

The display 1960 (e.g., the display 440 of FIG. 1A, the display 440 of FIG. 1B, or the display 1860 of FIG. 18) may include a panel 1962, a hologram device 1964, or a projector 1966. The panel 1962 may be the same as or similar to the display 1860 illustrated in FIG. 18. The panel 1962 may be implemented, for example, to be flexible, transparent or wearable. The panel 1962 and the touch panel 1952 may be integrated into a single module. The hologram device 1964 may display a stereoscopic image in a space using a light interference phenomenon. The projector 1966 may project light onto a screen so as to display an image. For example, the screen may be arranged in the inside or the outside of the electronic device 1901. According to an embodiment, the display 1960 may further include a control circuit for controlling the panel 1962, the hologram device 1964, or the projector 1966.

The interface 1970 may include, for example, a high-definition multimedia interface (HDMI) 1972, a universal serial bus (USB) 1974, an optical interface 1976, or a D-subminiature (D-sub) 1978. The interface 1970 may be included, for example, in the communication interface 1870 illustrated in FIG. 18. Additionally or generally, the interface 1970 may include, for example, a mobile high definition link (MHL) interface, a SD card/multi-media card (MMC) interface, or an infrared data association (IrDA) standard interface.

The audio module 1980 may convert a sound and an electric signal in dual directions. At least a part of the audio module 1980 may be included, for example, in the input/output interface 1850 illustrated in FIG. 18. The audio module 1980 may process, for example, sound information that is input or output through a speaker 1982, a receiver 1984, an earphone 1986, or the microphone 1988.

For example, the camera module 1991 may shoot a still image or a video. According to an embodiment, the camera module 1991 may include at least one or more image sensors (e.g., a front sensor or a rear sensor), a lens, an image signal processor (ISP), or a flash (e.g., an LED or a xenon lamp).

The power management module 1995 may manage, for example, power of the electronic device 1901. According to an embodiment, a power management integrated circuit (PMIC), a charger IC, or a battery or fuel gauge may be included in the power management module 1995. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 1996 and a voltage, current or temperature thereof while the battery is charged. The battery 1996 may include, for example, a rechargeable battery and/or a solar battery.

The indicator 1997 may display a specific state of the electronic device 1901 or a part thereof (e.g., the processor 1910), such as a booting state, a message state, a charging state, and the like. The motor 1998 may convert an electrical signal into a mechanical vibration and may generate the following effects: vibration, haptic, and the like. Although not illustrated, a processing device (e.g., a GPU) for supporting a mobile TV may be included in the electronic device 1901. The processing device for supporting the mobile TV may process media data according to the standards of digital multimedia broadcasting (DMB), digital video broadcasting (DVB), MediaFloTM, or the like.

Each of the above-mentioned elements of the electronic device according to various embodiments of the present disclosure may be configured with one or more components, and the names of the elements may be changed according to the type of the electronic device. In various embodiments, the electronic device may include at least one of the above-mentioned elements, and some elements may be omitted or other additional elements may be added. Furthermore, some of the elements of the electronic device according to various embodiments may be combined with each other so as to form one entity, so that the functions of the elements may be performed in the same manner as before the combination.

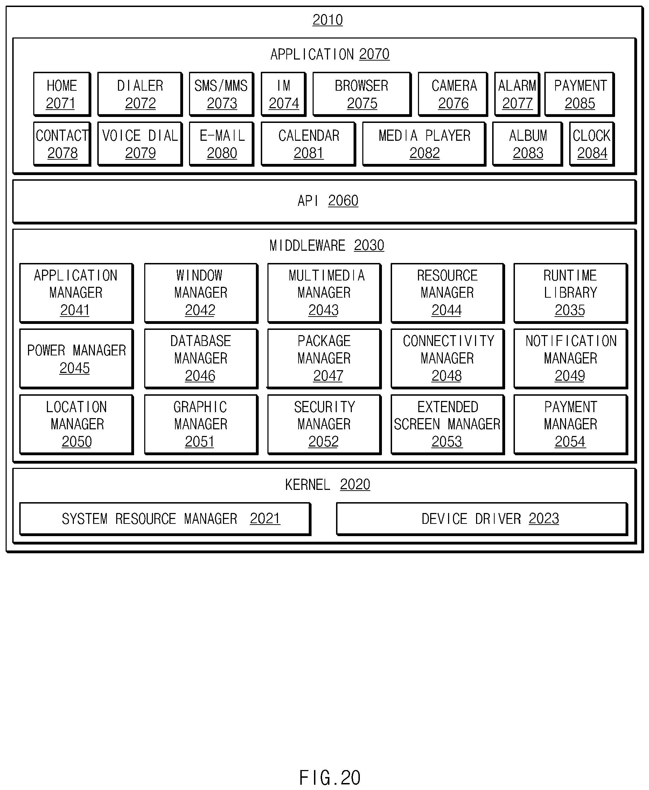

FIG. 20 illustrates a block diagram of a program module, according to an embodiment of the present disclosure.

According to an embodiment, a program module 2010 (e.g., the program 1840) may include an operating system (OS) to control resources associated with an electronic device (e.g., the electronic device 1801), and/or diverse applications (e.g., the application program 1847) driven on the OS. The OS may be, for example, Android™, iOS™, Windows™, Symbian™, or Tizen™.

Referring to FIG. 20, the program module 2010 may include a kernel 2020, a middleware 2030, an application programming interface (API) 2060, and/or an application 2070. At least a portion of the program module 2010 may be preloaded on an electronic device or may be downloadable from an external electronic device (e.g., the first electronic device 1802, the second electronic device 1804, the server 1806, or the like).

The kernel 2020 (e.g., the kernel 1841) may include, for example, a system resource manager 2021 or a device driver 2023. The system resource manager 2021 may perform control, allocation, or retrieval of system resources. According to an embodiment, the system resource manager 2021 may include a process managing unit, a memory managing unit, or a file system managing unit. The device driver 2023 may include, for example, a display driver, a camera driver, a BT driver, a shared memory driver, a USB driver, a keypad driver, a Wi-Fi driver, an audio driver, or an interprocess communication (IPC) driver.

The middleware 2030 may provide, for example, a function that the application 2070 needs in common, or may provide diverse functions to the application 2070 through the API 2060 to allow the application 2070 to efficiently use limited system resources of the electronic device. According to an embodiment, the middleware 2030 (e.g., the middleware 1843) may include at least one of a runtime library 2035, an application manager 2041, a window manager 2042, a multimedia manager 2043, a resource manager 2044, a power manager 2045, a database manager 2046, a package manager 2047, a connectivity manager 2048, a notification manager 2049, a location manager 2050, a graphic manager 2051, a security manager 2052, an extended screen manager 2053, or a payment manager 2054.

The runtime library 2035 may include, for example, a library module that is used by a compiler to add a new function through a programming language while the application 2070 is being executed. The runtime library 2035 may perform input/output management, memory management, or capacities about arithmetic functions.

The application manager 2041 may manage, for example, a life cycle of at least one application of the application 2070. The window manager 2042 may manage a graphical user interface (GUI) resource that is used in a screen. The multimedia manager 2043 may identify a format necessary for playing diverse media files, and may perform encoding or decoding of media files by using a codec suitable for the format. The resource manager 2044 may manage resources such as a storage space, memory, or source code of at least one application of the application 2070.

The power manager 2045 may operate, for example, with a basic input/output system (BIOS) to manage the capacity of a battery, a temperature, or power, and may determine or provide power information for an operation of an electronic device, by using the corresponding information about one of the capacity of the battery, the temperature, or the power. The database manager 2046 may generate, search for, or modify database that is to be used in at least one application of the application 2070. The package manager 2047 may install or update an application that is distributed in the form of package file.

The connectivity manager 2048 may manage, for example, wireless connection such as Wi-Fi or BT. The notification manager 2049 may display or notify an event such as arrival message, appointment, or proximity notification in a mode that does not disturb a user. The location manager 2050 may manage location information about an electronic device. The graphic manager 2051 may manage a graphic effect that is provided to a user, or manage a UI relevant thereto. The security manager 2052 may provide a general security function necessary for system security, user authentication, or the like. According to an embodiment, the extended screen manager 2053 may manage information to be provided, a graphic effect, or a UI associated with the information to be provided or the graphic effect, through the area of a display determined such that a graphic image is displayed.

According to an embodiment, in the case where an electronic device (e.g., the electronic device 1801) includes a telephony function, the middleware 2030 may further include a telephony manager for managing a voice or video call function of the electronic device. The middleware 2030 may include a middleware module that combines diverse functions of the above-described elements. The middleware 2030 may provide a module specialized to each OS kind to provide differentiated functions. Additionally, the middleware 2030 may dynamically remove a part of the preexisting elements or may add new elements thereto.

The API 2060 (e.g., the API 1845) may be, for example, a set of programming functions and may be provided with a configuration that is variable depending on an OS. For example, in the case where an OS is the android or the iOS, it may provide one API set per platform. In the case where an OS is Tizen™, it may provide two or more API sets per platform.

The application 2070 (e.g., the application program 1847) may include, for example, one or more applications capable of providing functions for a home 2071, a dialer 2072, an SMS/MMS 2073, an instant message (IM) 2074, a browser 2075, a camera 2076, an alarm 2077, a contact 2078, a voice dial 2079, an e-mail 2080, a calendar 2081, a media player 2082, an album 2083, a timepiece 2084, and a payment 2085, or for offering health care (e.g., measuring an exercise quantity, blood sugar, or the like) or environment information (e.g., information of barometric pressure, humidity, temperature, or the like).

According to an embodiment, the application 2070 may include an application (hereinafter referred to as "information exchanging application" for descriptive convenience) to support information exchange between an electronic device (e.g., the electronic device 1801) and an external electronic device (e.g., the first electronic device 1802 or the second electronic device 1804). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device. Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of elements) or adjustment of brightness (or resolution) of a display) of the external electronic device which communicates with the electronic device, an application running in the external electronic device, or a service (e.g., a call service, a message service, or the like) provided from the external electronic device.

According to an embodiment, the application 2070 may include an application (e.g., a health care application of a mobile medical device) that is assigned in accordance with an attribute of an external electronic device. According to an embodiment, the application 2070 may include an application that is received from an external electronic device (e.g., the first electronic device 1802, the second electronic device 1804, or the server 1806). According to an embodiment, the application 2070 may include a preloaded application or a third party application that is downloadable from a server. The names of elements of the program module 2010 according to the embodiment may be modifiable depending on kinds of operating systems (OSs).

According to various embodiments, at least a portion of the program module 2010 may be implemented by software, firmware, hardware, or a combination of two or more thereof. At least a portion of the program module 2010 may be implemented (e.g., executed), for example, by the processor (e.g., the processor 1910). At least a portion of the program module 2010 may include, for example, modules, programs, routines, sets of instructions, processes, or the like for performing one or more functions.

The term "module" used in this disclosure may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 1820), may cause the one or more processors to perform a function corresponding to the instruction. The computer-readable storage media, for example, may be the memory 1830.

A computer-readable recording medium may include a hard disk, a floppy disk, a magnetic media (e.g., a magnetic tape), an optical media (e.g., a compact disc read only memory (CD-ROM) and a digital versatile disc (DVD), a magnetooptical media (e.g., a floptical disk)), and hardware devices (e.g., a read only memory (ROM), a random-access memory (RAM), or a flash memory). Also, a program instruction may include not only a mechanical code such as things generated by a compiler but also a high-level language code executable on a computer using an interpreter. The above hardware unit may be configured to operate via one or more software modules for performing an operation according to various embodiments, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added.

## Claims

1. An electronic device (100) comprising:
a housing;
a transceiver (110) disposed inside the housing and configured to support a wireless communication protocol having short-range coverage;
a communication interface (120) disposed inside the housing;
at least one processor (130) disposed inside the housing and operatively connected to the transceiver (110) and the communication interface (120); and
a memory (140) disposed inside the housing and electrically connected or coupled to the at least one processor (130);
wherein the memory (140) stores instructions, when executed, cause the at least one processor (130) to:
connect (201) a first external device (200) wirelessly through the transceiver (110) by using a first service set identifier, SSID of the electronic device (100);
receive (202) first information about the first external device (200) from the first external device (200) by using the transceiver (110);
transmit (203) at least part of the first information and second information about the electronic device (100), to a second external device (300, 400) through at least one of the transceiver (110) or the communication interface (120), wherein the part of the second information includes a second SSID of the electronic device (100);
forward (206) connection information from the second external device (300, 400), to the first external device (200) through at least one of the transceiver (110) or the communication interface (120), wherein the connection information is based on the first information and the second information and includes the second SSID for a wireless connection between the first external device (200) and the electronic device (100);
or receive a transmission request of said connection information from the second external device (300, 400) through at least one of the transceiver (110) or the communication interface (120) and, in response to the transmission request, transmit (206) said connection information to the first external device (200) by using the transceiver (110) ; and
connect (207) to the first external device (200) wirelessly through the transceiver (110) by using the connection information.

2. The electronic device (100) of claim 1, wherein the instructions, when executed, cause the at least one processor (130) to:
receive (201a) at least one of a probe request frame or an association request frame, which includes the first information, from the first external device (200) by using the transceiver.

3. The electronic device (100) of claim 1, wherein the instructions, when executed, cause the at least one processor (130) to:
periodically broadcast (201e) a beacon frame including the first SSID.

4. The electronic device (100) of claim 1, wherein the instructions, when executed, cause the at least one processor (130) to:
receive a request for searching for the first external device (200) from the second external device (300, 400) through at least one of the transceiver (110) or the communication interface (120); and
broadcast (201e) a beacon frame including the first SSID in response to the reception of the request.

5. The electronic device (100) of claim 1,
wherein the memory (140) stores a wireless connection history between the electronic device (100) and the first external device (200), and
wherein the instructions, when executed, cause the at least one processor (130) to:
if it is determined based on the first information and the wireless connection history that there is no history in which the first external device (200) is connected to the electronic device (100), transmit at least part of the first information and the second information to the second external device (300, 400).

6. The electronic device (100) of claim 1, wherein the wireless communication protocol includes at least one of a Bluetooth, BT, scheme, a Zigbee communication scheme, a wireless highway addressable remote transducer, HART, communication scheme, a near field communication scheme, a Wi-Fi scheme, a Wi-Fi direct scheme, a GSM communication scheme, a high speed downlink packet access, HSDPA, communication scheme, a LTE communication scheme, a LTE-A communication scheme, a code-division multiple access, CDMA, communication scheme, a CDMA2000 communication scheme, or a wireless broadband, WIBRO, communication scheme.

7. The electronic device (100) of claim 1, wherein the first information includes at least one of manufacturer information of the first external device (200), a model name of the first external device (200), a device name of the first external device (200), a version name of the first external device (200), a product group of the first external device (200), a serial number of the first external device (200), authentication information for network connection, media access control, MAC, address, or internet protocol, IP, address.

8. The electronic device (100) of claim 1, wherein the connection information includes at least one of a password corresponding to the second SSID, security information, or credential information for passpoint connection.

9. The electronic device (100) of claim 1,
wherein the instructions, when executed, cause the at least one processor (130) to:
if the electronic device (100) is wirelessly connected to the second external device (300, 400) by using the transceiver (110),
transmit at least part of the first information and the second information to the second external device (300, 400) by using the transceiver; and
forward the connection information, from the second external device (300, 400), to the first external device through the transceiver or receive the transmission request of the connection information from the second external device (300, 400) through the transceiver and transmit the connection information stored in the memory to the first external device in response to the transmission request.

## Patentansprüche

1. Elektronische Vorrichtung (100), umfassend:
ein Gehäuse;
einen Transceiver (110), der sich in dem Gehäuse befindet und so gestaltet ist, dass er ein drahtlose Kommunikationsprotokoll mit einer Nahbereichsabdeckung unterstützt;
eine Kommunikationsschnittstelle (120), die sich in dem Gehäuse befindet;
mindestens einen Prozessor (130), der sich in dem Gehäuse befindet und betriebsfähig mit dem Transceiver (110) und der Kommunikationsschnittstelle (120) verbunden ist; und
einen Speicher (140), der sich in dem Gehäuse befindet und mit dem mindestens einen Prozessor (130) elektrisch verbunden oder gekoppelt ist;
wobei der Speicher (140) Anweisungen speichert, die, wenn sie ausgeführt werden, bewirken, dass der mindestens eine Prozessor (130) folgendes ausführt:
drahtloses Verbinden (201) einer ersten externen Vorrichtung (200) über den Transceiver (110) unter Verwendung eines ersten Service Set Identifiers, SSID, der elektronischen Vorrichtung (100);
Empfangen (202) erster Informationen über die erste externe Vorrichtung (200) unter Verwendung des Transceivers (110) von der ersten externen Vorrichtung (200);
Übermitteln (203) wenigstens eines Teils der ersten Informationen und zweiter Informationen über die elektronische Vorrichtung (100) über mindestens den Transceiver (110) und/oder die Kommunikationsschnittstelle (120) an eine zweite externe Vorrichtung (300, 400), wobei der Teil der zweiten Informationen einen zweiten SSID der elektronischen Vorrichtung (100) enthält;
Weiterleiten (206) von Verbindungsinformationen von der zweiten externen Vorrichtung (300, 400) über mindestens den Transceiver (110) und/oder die Kommunikationsschnittstelle (120) an die erste externe Vorrichtung (200), wobei die Verbindungsinformationen auf den ersten Informationen und den zweiten Informationen basieren und den zweiten SSID für eine drahtlose Verbindung zwischen der ersten externen Vorrichtung (200) und der elektronischen Vorrichtung (100) enthalten; oder
Empfangen einer Übermittlungsanforderung der Verbindungsinformationen von der zweiten externen Vorrichtung (300, 400) über mindestens den Transceiver (110) und/oder die Kommunikationsschnittstelle (120), und als Reaktion auf die Übermittlungsanforderung, Übermitteln (206) der Verbindungsinformationen unter Verwendung des Transceivers (110) an die erste externe Vorrichtung (200); und
drahtloses Verbinden (207) mit der ersten externen Vorrichtung (200) über den Transceiver (110) unter Verwendung der Verbindungsinformationen.

2. Elektronische Vorrichtung (100) nach Anspruch 1, wobei die Anweisungen, wenn sie ausgeführt werden, bewirken, dass der mindestens eine Prozessor (130) folgendes ausführt:
Empfangen (201a) mindestens eines Probe Request-Frames oder eines Zuordnungs-Request-Frames, der die ersten Informationen enthält, unter Verwendung des Transceivers von der ersten externen Vorrichtung (200).

3. Elektronische Vorrichtung (100) nach Anspruch 1, wobei die Anweisungen, wenn sie ausgeführt werden, bewirken, dass der mindestens eine Prozessor (130) folgendes ausführt:
periodisches Senden (201e) eines Beacon-Frames, der den ersten SSID enthält.

4. Elektronische Vorrichtung (100) nach Anspruch 1, wobei die Anweisungen, wenn sie ausgeführt werden, bewirken, dass der mindestens eine Prozessor (130) folgendes ausführt:
Empfangen einer Anforderung zur Suche nach der ersten externen Vorrichtung (200) über mindestens den Transceiver (110) und/oder die Kommunikationsschnittstelle (120) von der zweiten externen Vorrichtung (300, 400); und
Senden (201e) eines Beacon-Frames, der den ersten SSID enthält, als Reaktion auf den Empfang der Anforderung.

5. Elektronische Vorrichtung (100) nach Anspruch 1,
wobei der Speicher (140) einen drahtlosen Verbindungsverlauf zwischen der elektronischen Vorrichtung (100) und der ersten externen Vorrichtung (200) speichert, und
wobei die Anweisungen, wenn sie ausgeführt werden, bewirken, dass der mindestens eine Prozessor (130) folgendes ausführt:
wenn auf der Basis der ersten Informationen und des drahtlosen Verbindungsverlaufs bestimmt wird, dass es keinen Verlauf gibt, bei dem die erste externe Vorrichtung (200) mit der elektronischen Vorrichtung (100) verbunden ist, Übermitteln wenigstens eines Teils der ersten Informationen und der zweiten Informationen an die zweite externe Vorrichtung (300, 400).

6. Elektronische Vorrichtung (100) nach Anspruch 1, wobei das drahtlose Kommunikationsprotokoll mindestens eines der folgenden umfasst: ein Bluetooth-, BT, Schema, ein Zigbee-Kommunikationsschema, ein drahtloses Highway Addressable Remote Transducer-, HART, Kommunikationsschema, ein Nahbereichs-Kommunikationsschema, ein Wi-Fi-Schema, ein Wi-Fi Direct-Schema, ein GSM-Kommunikationsschema, ein High Speed Downlink Packet Access-, HSDPA, Kommunikationsschema, ein LTE-Kommunikationsschema, ein LTE-A-Kommunikationsschema, ein Code-Division Multiple Access-, CDMA, Kommunikationsschema, ein CDMA2000-Kommunikationsschema oder ein Wireless Broadband, WIBRO, Kommunikationsschema.

7. Elektronische Vorrichtung (100) nach Anspruch 1, wobei die ersten Informationen mindestens eines der folgenden umfassen: Herstellerinformationen der ersten externen Vorrichtung (200), eine Modellbezeichnung der ersten externen Vorrichtung (200), eine Gerätebezeichnung der ersten externen Vorrichtung (200), einen Versionsnamen der ersten externen Vorrichtung (200), eine Produktgruppe der ersten externen Vorrichtung (200), eine Seriennummer der ersten externen Vorrichtung (200), Authentifizierungsinformationen für die Netzwerkverbindung, Media Access Control-, MAC, Adresse oder Internet Protocol-, IP, Adresse.

8. Elektronische Vorrichtung (100) nach Anspruch 1, wobei die Verbindungsinformationen mindestens ein dem zweiten SSID entsprechendes Kennwort, Sicherheitsinformationen oder Zugangsinformationen für eine Anschlusspunktverbindung enthalten.

9. Elektronische Vorrichtung (100) nach Anspruch 1, wobei die Anweisungen, wenn sie ausgeführt werden, bewirken, dass der mindestens eine Prozessor (130) folgendes ausführt:
wenn die elektronische Vorrichtung (100) drahtlos mit der zweiten externen Vorrichtung (300, 400) verbunden ist, unter Verwendung des Transceivers (110):
Übermitteln wenigstens eines Teils der ersten Informationen und der zweiten Informationen unter Verwendung des Transceivers an die zweite externe Vorrichtung (300, 400); und
Weiterleiten der Verbindungsinformationen über den Transceiver von der zweiten externen Vorrichtung (300, 400) an die erste externe Vorrichtung, oder Empfangen der Übermittlungsanforderung der Verbindungsinformationen über den Transceiver von der zweiten externen Vorrichtung (300, 400), und Übermitteln der in dem Speicher gespeicherten Verbindungsinformationen an die erste externe Vorrichtung als Reaktion auf die Übermittlungsanforderung.

## Revendications

1. Dispositif électronique (100) comprenant :
un boîtier ;
un émetteur-récepteur (110) disposé à l'intérieur du boîtier et conçu pour prendre en charge un protocole de communication sans fil ayant une couverture de courte portée ;
une interface de communication (120) disposée à l'intérieur du boîtier ;
au moins un processeur (130) disposé à l'intérieur du boîtier et connecté fonctionnellement à l'émetteur-récepteur (110) et à l'interface de communication (120) ; et
une mémoire (140) disposée à l'intérieur du boîtier et couplée ou connectée électriquement à l'au moins un processeur (130) ;
la mémoire (140) stockant des instructions qui, lorsqu'elles sont exécutées, amènent l'au moins processeur (130) à :
connecter (201) un premier dispositif externe (200) sans fil par l'intermédiaire de l'émetteur-récepteur (110) en utilisant un premier identifiant d'ensemble de services, SSID, du dispositif électronique (100) ;
recevoir (202) des premières informations sur le premier dispositif externe (200) en provenance du premier dispositif externe (200) en utilisant l'émetteur-récepteur (110) ;
transmettre (203) au moins une partie des premières informations et des secondes informations concernant le dispositif électronique (100), à un second dispositif externe (300, 400) par l'intermédiaire de l'émetteur-récepteur (110) et/ou de l'interface de communication (120), la partie des secondes informations comprenant un second SSID du dispositif électronique (100) ;
transmettre (206) des informations de connexion en provenance du second dispositif externe (300, 400) au premier dispositif externe (200) par l'intermédiaire de l'émetteur-récepteur (110) et/ou de l'interface de communication (120), les informations de connexion étant basées sur les premières informations et les secondes informations et comprenant le second SSID pour une connexion sans fil entre le premier dispositif externe (200) et le dispositif électronique (100) ; ou
recevoir une demande de transmission desdites informations de connexion du second dispositif externe (300, 400) par l'intermédiaire de l'émetteur-récepteur (110) et/ou de l'interface de communication (120) et en réponse à la demande de transmission, transmettre (206) lesdites informations de connexion au premier dispositif externe (200) en utilisant l'émetteur-récepteur (110) ; et
se connecter (207) au premier dispositif externe (200) sans fil par l'intermédiaire de l'émetteur-récepteur (110) en utilisant les informations de connexion.

2. Dispositif électronique (100) selon la revendication 1, les instructions, lorsqu'elles sont exécutées, amenant l'au moins processeur (130) à :
recevoir (201a) une trame de demande de sonde ou une trame de demande d'association, qui comprend les premières informations, en provenance du premier dispositif externe (200) en utilisant l'émetteur-récepteur.

3. Dispositif électronique (100) selon la revendication 1, les instructions, lorsqu'elles sont exécutées, amenant l'au moins processeur (130) à :
diffuser périodiquement (201e) une trame de balise comprenant le premier SSID.

4. Dispositif électronique (100) selon la revendication 1, les instructions, lorsqu'elles sont exécutées, amenant l'au moins processeur (130) à :
recevoir une demande de recherche du premier dispositif externe (200) en provenance du second dispositif externe (300, 400) par l'intermédiaire de l'émetteur-récepteur (110) et/ou de l'interface de communication (120) ; et
diffuser (201e) une trame de balise comprenant le premier SSID en réponse à la réception de la demande.

5. Dispositif électronique (100) selon la revendication 1,
la mémoire (140) stockant un historique de connexion sans fil entre le dispositif électronique (100) et le premier dispositif externe (200), et
les instructions, lorsqu'elles sont exécutées, amenant l'au moins processeur (130) à :
s'il est déterminé, sur la base des premières informations et de l'historique des connexions sans fil, qu'il n'existe pas d'historique dans lequel le premier dispositif externe (200) est connecté au dispositif électronique (100), transmettre au moins une partie des premières informations et des secondes informations au second dispositif externe (300, 400).

6. Dispositif électronique (100) selon la revendication 1, le protocole de communication sans fil comprenant un schéma Bluetooth, BT, un schéma de communication Zigbee, un schéma de communication de transducteur Highway Addressable Remote Transducer, HART, sans fil, un schéma de communication en champ proche, un schéma Wi-Fi, un schéma Wi-Fi direct, un schéma de communication GSM, un schéma de communication High Speed Downlink Packet Access, HSDPA, un schéma de communication LTE, un schéma de communication LTE-A, un schéma de communication à accès multiple par répartition en code, CDMA, un schéma de communication CDMA2000, et/ou un schéma de communication à large bande sans fil, WIBRO.

7. Dispositif électronique (100) selon la revendication 1, les premières informations comprenant des informations de fabricant du premier dispositif externe (200), un nom de modèle du premier dispositif externe (200), un nom de dispositif du premier dispositif externe (200), un nom de version du premier dispositif externe (200), un groupe de produits du premier dispositif externe (200), un numéro de série du premier dispositif externe (200), des informations d'authentification pour la connexion au réseau, une adresse de contrôle d'accès aux médias, MAC, et/ou une adresse de protocole Internet, IP.

8. Dispositif électronique (100) selon la revendication 1, les informations de connexion comprenant un mot de passe correspondant au second SSID, des informations de sécurité et/ou des informations d'identification pour la connexion de point de contrôle.

9. Dispositif électronique (100) selon la revendication 1,
les instructions, lorsqu'elles sont exécutées, amenant l'au moins processeur (130) à :
si le dispositif électronique (100) est connecté sans fil au second dispositif externe (300, 400) en utilisant l'émetteur-récepteur (110),
transmettre au moins une partie des premières informations et des secondes informations au second dispositif externe (300, 400) en utilisant l'émetteur-récepteur ; et
transmettre les informations de connexion, du second dispositif externe (300, 400) au premier dispositif externe par l'intermédiaire de l'émetteur-récepteur ou recevoir la demande de transmission des informations de connexion du second dispositif externe (300, 400) par l'intermédiaire de l'émetteur-récepteur et transmettre les informations de connexion stockées dans la mémoire au premier dispositif externe en réponse à la demande de transmission.
